# EUROPEAN PATENT SPECIFICATION

(11) **EP 4 111 404 B1**
(45) Date of publication and mention of the grant of the patent: **04.12.2024**
(21) Application number: 21760252.3
(22) Date of filing: 24.02.2021
(51) Int. Cl.: G06F 18/22

(54) **INTERNET MEME ECONOMY**
INTERNET-MEME-ÖKONOMIE
ÉCONOMIE DE MÈME INTERNET

(30) Priority: 24.02.2020 US 202062980916 P
(43) Date of publication of application: 04.01.2023
(73) Proprietor: SNAP, INC., Santa Monica CA 90405 (US)
(72) Inventor: HARRIS, Jeffrey, Santa Monica, California 90405 (US); MCELENEY, Daniel, Santa Monica, California 90405 (US); DODINI, Harrison John, Santa Monica, California 90405 (US); FU, Ernestine, Santa Monica, California 90405 (US)
(74) Representative: Kramer, Dani
(86) International application number: PCT/US2021/019367
(87) International publication number: WO 2021/173634

(56) References cited:
- US-A1- 2008 154 798
- US-A1- 2009 192 896
- US-A1- 2012 150 957
- US-A1- 2012 150 957
- US-A1- 2014 222 529
- US-A1- 2016 080 476
- US-A1- 2016 080 476
- US-A1- 2017 017 638
- US-A1- 2019 349 426

## Description

### CROSS-REFERENCE TO RELATED APPLICATIONS

This application claims the benefit of U.S. Provisional Patent Application No. 62/980,916, filed on February 24, 2020, 2020.

The proliferation of access to the Internet has significantly expanded participation in social networks and social media platforms as a means of sharing information. Internet memes are an example of information that is shared over the Internet, typically using social networks and social media platforms. Internet memes are pieces of digital media (e.g., digital images or digital video clips) combined with a text word or phrase to convey or represent a particular theme or meaning. Internet memes can be used to promote or share different types of information, including humor, news, entertainment, etc. Many Internet meme creators and promoters hope to have an Internet meme become "viral," where sharing of a viral Internet meme proliferates quickly over a short period of time.

Documents US2017/017638 A1 and US2019/349426 A1 respectively refer to meme detection and to the Internet of things.

### BRIEF DESCRIPTION OF THE SEVERAL VIEWS OF THE DRAWINGS

In the drawings, which are not necessarily drawn to scale, like numerals may describe similar components in different views. To easily identify the discussion of any particular element or act, the most significant digit or digits in a reference number refer to the figure number in which that element is first introduced. Some nonlimiting examples are illustrated in the figures of the accompanying drawings in which:
FIG. 1A illustrates an example computer system upon which embodiments described herein be implemented.
FIG. 1B illustrates an example communication network upon which embodiments described herein may be implemented
FIG. 2 is a block diagram illustrating a system for identifying and tracking Internet memes, in accordance with embodiments.
FIG. 3 is a block diagram illustrating an Internet meme determiner of a system for identifying an Internet meme, in accordance with embodiments.
FIG. 4A and FIG. 4B illustrate examples of different iterations of the same Internet meme, according to some embodiments.
FIG. 5A illustrates a flow diagram of an example method for identifying an Internet meme, according to various embodiments
FIG. 5B illustrates a continuation of the flow diagram of FIG. 5A illustrating an example method for determining whether an instance of digital visual content is an instance of an identified Internet meme, according to various embodiments.
FIG. 6 illustrates a flow diagram of an example method for determining whether instances of digital visual content includes the same visual moment, according to various embodiments.
FIG. 7 illustrates a flow diagram of an example method for offering shares in an Internet meme, according to various embodiments.
FIG. 8 illustrates a flow diagram of an example method for assigning shares in an iteration of an Internet meme, according to various embodiments.
FIG. 9 illustrates a flow diagram of an example method for assigning currency to a user in exchange for receiving data on a meme, according to various embodiments.

### DETAILED DESCRIPTION

Reference will now be made in detail to various embodiments of the subject matter, examples of which are illustrated in the accompanying drawings. While various embodiments are discussed herein, it will be understood that they are not intended to limit to these embodiments. On the contrary, the presented embodiments are intended to cover alternatives, modifications and equivalents, which may be included within the spirit and scope the various embodiments as defined by the appended claims. Furthermore, in this Description of Embodiments, numerous specific details are set forth in order to provide a thorough understanding of embodiments of the present subject matter. However, embodiments may be practiced without these specific details. In other instances, well known methods, procedures, components, and circuits have not been described in detail as not to unnecessarily obscure aspects of the described embodiments.

### Notation and Nomenclature

Some portions of the detailed descriptions that follow are presented in terms of procedures, logic blocks, processing and other symbolic representations of operations on data within an electrical circuit. These descriptions and representations are the means used by those skilled in the data processing arts to most effectively convey the substance of their work to others skilled in the art. In the present application, a procedure, logic block, process, or the like, is conceived to be one or more self-consistent procedures or instructions leading to a desired result. The procedures are those requiring physical manipulations of physical quantities. Usually, although not necessarily, these quantities take the form of electrical or magnetic signals capable of being stored, transferred, combined, compared, and otherwise manipulated in an electronic device.

It should be borne in mind, however, that all of these and similar terms are to be associated with the appropriate physical quantities and are merely convenient labels applied to these quantities. Unless specifically stated otherwise as apparent from the following discussions, it is appreciated that throughout the description of embodiments, discussions utilizing terms such as "monitoring," "determining," "identifying," "tracking," "generating," "comparing," "maintaining," "calculating," or the like, refer to the actions and processes of an electronic device such as: a processor, a memory, a computing system, a mobile electronic device, or the like, or a combination thereof, The electronic device manipulates and transforms data represented as physical (electronic and/or magnetic) quantities within the electronic device's registers and memories into other data similarly represented as physical quantities within the electronic device's memories or registers or other such information storage, transmission, processing, or display components.

Embodiments described herein may be discussed in the general context of processor-executable instructions residing on some form of non-transitory processor-readable medium, such as program modules, executed by one or more computers or other devices. Generally, program modules include routines, programs, objects, components, data structures, etc., that perform particular tasks or implement particular abstract data types. The functionality of the program modules may be combined or distributed as desired in various embodiments.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, logic, circuits, and steps have been described generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example fingerprint sensing system and/or mobile electronic device described herein may include components other than those shown, including well-known components.

Various techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium comprising instructions that, when executed, perform one or more of the methods described herein. The non-transitory processor-readable data storage medium may form part of a computer program product, which may include packaging materials.

The non-transitory processor-readable storage medium may comprise random access memory (RAM) such as synchronous dynamic random access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

Various embodiments described herein may be executed by one or more processors, such as one or more motion processing units (MPUs), sensor processing units (SPUs), host processor(s) or core(s) thereof, digital signal processors (DSPs), general purpose microprocessors, application specific integrated circuits (ASICs), application specific instruction set processors (ASIPs), field programmable gate arrays (FPGAs), a programmable logic controller (PLC), a complex programmable logic device (CPLD), a discrete gate or transistor logic, discrete hardware components, or any combination thereof designed to perform the functions described herein, or other equivalent integrated or discrete logic circuitry. The term "processor," as used herein may refer to any of the foregoing structures or any other structure suitable for implementation of the techniques described herein. As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Moreover, processors can exploit nano-scale architectures such as, but not limited to, molecular and quantum-dot based transistors, switches and gates, in order to optimize space usage or enhance performance of user equipment. A processor may also be implemented as a combination of computing processing units.

In addition, in some aspects, the functionality described herein may be provided within dedicated software modules or hardware modules configured as described herein. Also, the techniques could be fully implemented in one or more circuits or logic elements. A general purpose processor may be a microprocessor, but in the alternative, the processor may be any conventional processor, controller, microcontroller, or state machine. A processor may also be implemented as a combination of computing devices, e.g., a combination of an SPU/MPU and a microprocessor, a plurality of microprocessors, one or more microprocessors in conjunction with an SPU core, MPU core, or any other such configuration.

### Overview of Discussion

The discussion begins with a description of an example computer system upon which embodiments of the present invention may be implemented. Example systems and components for identification and tracking of Internet memes are then described. Example operations for identification and tracking of Internet memes are then described.

The proliferation of access to the Internet has significantly expanded participation in social networks and social media platforms as a means of sharing information. Internet memes are an example of information that is shared over the Internet, typically using social networks and social media platforms. Internet memes are pieces of digital media (e.g., digital images or digital video clips) combined with a text word or phrase to convey or represent a particular theme or meaning. Internet memes can be used to promote or share different types of information, including humor, news, entertainment, etc. Many Internet meme creators and promoters hope to have an Internet meme become "viral," where sharing of a viral Internet meme proliferates quickly over a short period of time.

Currently, it is very difficult to measure or determine virality of Internet memes. In particular, conventional methods for measuring how viral an Internet meme is are typically based on subjective analysis performed after an Internet meme has obtained some level of recognition or notoriety. Moreover, conventional methods for measuring virality of Internet memes are typically platform specific, and do not reflect how viral an Internet meme is on other platforms. For instance, Internet memes are typically shared over multiple social networks and social media platforms. As sharing of an Internet meme proliferates across multiple social networks and social media platforms, the ability to track and measure instances of Internet memes breaks down, due to the diffuse nature of the proliferation.

Embodiments described herein provide methods and systems for identifying and tracking Internet memes. As utilized herein, and for the purposes of the described embodiments, an Internet meme is defined as a piece of digital visual media content (e.g., an image or a short video clip) that includes a caption (e.g., a text word, phrase, emoji, or other type of visual emphasis). Identification of an Internet meme includes determining the underlying piece of digital visual media content, also referred to herein as a "moment," where the moment can be used as a template for creating different iterations of the Internet meme. In other words, an Internet meme includes an underlying moment that is captioned using different visual emphasis, where each iteration of the moment is an iteration of the Internet meme. An example of an Internet meme is an image of an actor, in his or her role as a character in a movie, exhibiting a condescending look, captioned with different text, where each different instance of a text caption is a different iteration of the same Internet meme.

Identification of Internet memes allows for tracking of objective measurements of the proliferation of Internet memes, which can be used to objectively measure the virality of Internet memes. Such information would provide insight into the performance of Internet memes to the creators and promoters of Internet memes, allowing creators and promoters to understand the effectiveness and reach of particular Internet memes.

In accordance with various embodiments, methods and systems for identifying and tracking Internet memes are provided. In a method for identification of an Internet meme, a plurality of sources is monitored for digital visual content comprising a visual moment and a caption. It is determined whether instances of digital visual content include a same visual moment. Provided the instances of digital visual content include the same visual moment, the instances of digital visual content including the same visual moment are identified as similar digital visual content. Each instance of the similar digital visual content is tracked. Provided a total number of instances of the similar digital visual content exceeds an Internet meme threshold, the similar digital visual content is identified as an Internet meme, wherein the same visual moment is a root visual moment and each caption corresponds to a different iteration of the Internet meme.

Embodiments described herein pertain to identification Internet memes by determining whether digital visual contents are visually the same or similar. In one embodiment, the digital visual contents are digital images. In other embodiments, the digital visual content are video files, such as Graphics Interchange Format (GIF) files. It should be appreciated that other types of prerecorded media files, such as other types of image and video files, can be used herein. Moreover, it should be appreciated that any type of media file format can be used in accordance with the described embodiments, including but not limited to GIF, WebM, WebP, MPEG-4 (MP4), Animated Portable Network Graphics (APNG), Motion JPEG, Flash video (FLV), Windows Media video, M4V, etc. It should be appreciated that video content item can be looped (e.g., via a HTML 5 video element or Flash video element) to automatically repeat. In some embodiments, the video content item is a short form looping video file (e.g., less than 60 seconds).

In some embodiments, the plurality of sources monitored includes known websites hosting gifs and memes, and social media platforms. In some embodiments, an instance of digital visual content that is identified as an Internet meme is received for comparison to instances of digital visual content from monitored websites and social media platforms.

In accordance with some embodiments, perceptual hashes are used to determine similarity of instance of digital visual content. Perceptual hashing, as utilized herein, refers to an algorithm or function that is applied to a media file for generating a fingerprint or signature for the media file where the greater the similarity between two media files, the greater the similarity between the perceptual hashes for the two media files. In some embodiments, the output of a perceptual hashing function is a string or sequence, referred to herein as a perceptual hash. For example, two images that are visually similar to a person will have perceptual hashes that are similar, while two images that are visually much different to a person will have perceptual hashes that are less similar. Perceptual hashing can be contrasted with cryptographic hashing where slight variances in the input drastically change the output. Perceptual hashing is useful in determining whether two images are similar. Example perceptual hash functions include phash and dhash, but other types of perceptual hash functions exist and may be utilized herein, in accordance with the described embodiments. In various embodiments, perceptual hashing is utilized in the context of video files by generating perceptual hashes for frames of the video files.

In accordance with various embodiments described herein, similarity between media files, e.g., images or frames of videos, is determined by comparing perceptual hashes for the media files. An edit distance, also referred to herein as a "distance," between the perceptual hashes is determined. As utilized herein, an edit distance refers to a measure of difference between two sequences or strings. For example, edit distance is a measurement of how dissimilar two strings or sequences are to one another by counting the minimum number of operations required to transform one string into the other. Various types distance determinations may be utilized in accordance with the described embodiments, including and without limitation, the Levenshtein distance, the Hamming distance, the Damerau-Levenshtein distance, and the longest common sequence (LCS).

In some embodiments, to determine whether instances of digital visual content include a same visual moment, perceptual hashes are generated for each instance of the digital visual content. Perceptual hashes for each instance of the digital visual content are compared to determine a distance between the perceptual hashes. Provided the distance between two perceptual hashes satisfies a similarity threshold, it is determined that the instances of digital visual content corresponding to the perceptual hashes include the same visual moment. In some embodiments, provided the distance between two perceptual hashes satisfies the similarity threshold, the instances of digital visual content corresponding to the perceptual hashes are identified as similar digital visual content.

In some embodiments, once an Internet meme is identified, instances of digital visual content can be compared to the Internet meme to determine if the instances of digital visual content are also the Internet meme. Provided an instance of digital visual content satisfies a similarity threshold with an Internet meme, the instance of digital visual content is identified as an instance of the Internet meme. In some embodiments, it is determined whether instance of the Internet meme is identical to another instance of the Internet meme. Provided the instance of the Internet meme is not identical to another instance of the Internet meme, it is determined that the instance of the Internet meme is a new iteration of the Internet meme. Provided the instance of the Internet meme is identical to another instance of the Internet meme, it is determined that the instance of the Internet meme is another instance of an existing iteration of the Internet meme.

In accordance with various embodiments, metrics corresponding to each instance of the Internet meme is tracked for use in generating objective analytics for determine virality of the Internet meme. In some embodiments, each instance of the Internet meme is tracked at the plurality of sources. Each iteration of the Internet meme is tracked. A reach of each iteration of the Internet meme is determined, wherein the reach of each iteration of the Internet meme corresponds to engagement with each iteration of the Internet meme. In some embodiments, a viral score for each Internet meme is calculated, the viral score comprising a first component associated with the reach of each iteration of the Internet meme and a second component associated with a number of iterations of each Internet meme.

As presented above, identification and tracking of Internet memes is important for determining the reach and effectiveness of Internet memes. Providing objective measurements on the virality of a meme is important for facilitating the creation and promotion of Internet memes. In particular, providing measurable data on the volume and exposure of Internet memes improves the accuracy of the evaluation of the performance of an Internet meme, providing insight to Internet meme creators and promoters that was not previously available. Hence, the embodiments of the present invention greatly extend beyond conventional methods of identification and tracking of Internet memes. Moreover, embodiments of the present invention amount to significantly more than merely using a computer to perform identification and tracking of Internet memes. Instead, embodiments of the present invention specifically recite a novel process, rooted in computer technology, utilizing objective identification and tracking of Internet memes across multiple websites and social media platforms to determine an obj ective determination of virality of Internet memes.

As described above, embodiments of the present invention provide systems and methods for objectively evaluating a cultural impact of an Internet meme. For example, a viral score can be calculated based on objective measurements of the number of iterations of an Internet meme and a reach of each iteration of the Internet meme. Using these objective measurements, a "meme economy" can be established for providing a trading platform allowing users to invest in Internet memes and to speculate on their viral impact (e.g., viral score) with the objective of "buying" Internet memes as they ascend in viral impact.

In one embodiment, a method for facilitating an Internet meme economy, executed by one or more processors, is provided. The method includes identifying an Internet meme, providing an offering of shares in the Internet meme at a first share price, receiving a cryptocurrency purchase of shares in the Internet meme from a user, tracking the reach of the Internet meme, and based on the tracking of the Internet meme reaching a first threshold, providing a buyback offer for shares in the Internet meme at a second share price, the second share price being greater than the first share price.

In another embodiment, a computing apparatus includes a processor and a memory storing instructions that, when executed by the processor, configure the apparatus to identify an Internet meme, provide an offering of shares in the Internet meme at a first share price, receive a cryptocurrency purchase of shares in the Internet meme from a user, track the reach of the Internet meme, and based on the tracking of the Internet meme reaching a first threshold, provide a buyback offer for shares in the Internet meme at a second share price, the second share price being greater than the first share price.

In another embodiment, a non-transitory computer-readable storage medium is provided, the computer-readable storage medium including instructions that when executed by a computer, cause the computer to identify an Internet meme, provide an offering of shares in the Internet meme at a first share price, receive a cryptocurrency purchase of shares in the Internet meme from a user, track the reach of the Internet meme, and based on the tracking of the Internet meme reaching a first threshold, provide a buyback offer for shares in the Internet meme at a second share price, the second share price being greater than the first share price.

The method may also include, based on the tracking of the meme reaching a second threshold that is greater than the first threshold, providing a buyback offer for shares in the Internet meme at a third share price, the third share price being greater than the second share price.

Identifying the Internet meme may include monitoring a plurality of online sources for digital visual content, determining whether instances of digital visual content include a same visual moment, identifying digital visual content including the same visual moment as similar visual content, tracking each instance of similar digital visual content on the online sources, and based on the number of instances of similar digital visual content exceeding a meme threshold, identifying the similar digital visual content as the Internet meme.

The method may further include identifying an iteration of the Internet meme and assigning shares in the iteration of the Internet meme to shareholders of the Internet meme. The assigning of the shares may include determining a lineage of the Internet meme, and assigning shares in the iteration of the Internet meme to shareholders of the Internet meme based on the lineage of the Internet meme. The assigning of the shares may include determining the relationship of the owner of the shares in the Internet meme to the Internet meme, and assigning shares in the iteration of the Internet meme based on the relationship of the owner of the shares in the Internet meme to the Internet meme.

A multiplier may be applied to the shares in the Internet meme to determine the number of shares in the iteration of the Internet meme that are assigned, the multiplier being greater for a creator of the Internet meme than for a mere owner of shares of the Internet meme.

The method may also include displaying a further Internet meme to a user, receiving data on the further Internet meme from the user, and awarding cryptocurrency to the user based on the data received from the user on the further Internet meme. The data may include data on the lineage of the further Internet meme or data categorizing the further Internet meme.

The computing apparatus may, based on the tracking of the meme reaching a second threshold that is greater than the first threshold, provide a buyback offer for shares in the Internet meme at a third share price, the third share price being greater than the second share price.

The computing apparatus may also monitor a plurality of online sources for digital visual content, determine whether instances of digital visual content include a same visual moment, identify digital visual content including the same visual moment as similar visual content, track each instance of similar digital visual content on the online sources, and based on the number of instances of similar digital visual content exceeding a meme threshold, identifying the similar digital visual content as the Internet meme.

The computing apparatus may also identify an iteration of the Internet meme and assign shares in the iteration of the Internet meme to shareholders of the Internet meme. The computing apparatus may also display a further Internet meme to a user, receive data on the further Internet meme from the user, and award cryptocurrency to the user based on the data received from the user on the further Internet meme. The data may include data on the lineage of the further Internet meme or data categorizing the further Internet meme.

The computer-readable storage medium may further configure the computer to, based on the tracking of the meme reaching a second threshold that is greater than the first threshold, provide a buyback offer for shares in the Internet meme at a third share price, the third share price being greater than the second share price.

The computer-readable storage medium may further configure the computer to identify the Internet meme by monitoring a plurality of online sources for digital visual content, determining whether instances of digital visual content include a same visual moment, identifying digital visual content including the same visual moment as similar visual content, tracking each instance of similar digital visual content on the online sources, and based on the number of instances of similar digital visual content exceed a meme threshold, identifying the similar digital visual content as the Internet meme.

The computer-readable storage medium may further configure the computer to identify an iteration of the Internet meme and assign shares in the iteration of the Internet meme to shareholders of the Internet meme.

The computer-readable storage medium may further configure the computer to display a further Internet meme to a user, receive data on the further Internet meme from the user, and award cryptocurrency to the user based on the data received from the user on the further Internet meme. Other technical features may be readily apparent to one skilled in the art from the following figures, descriptions, and claims.

### Example Computer System and Communication Network

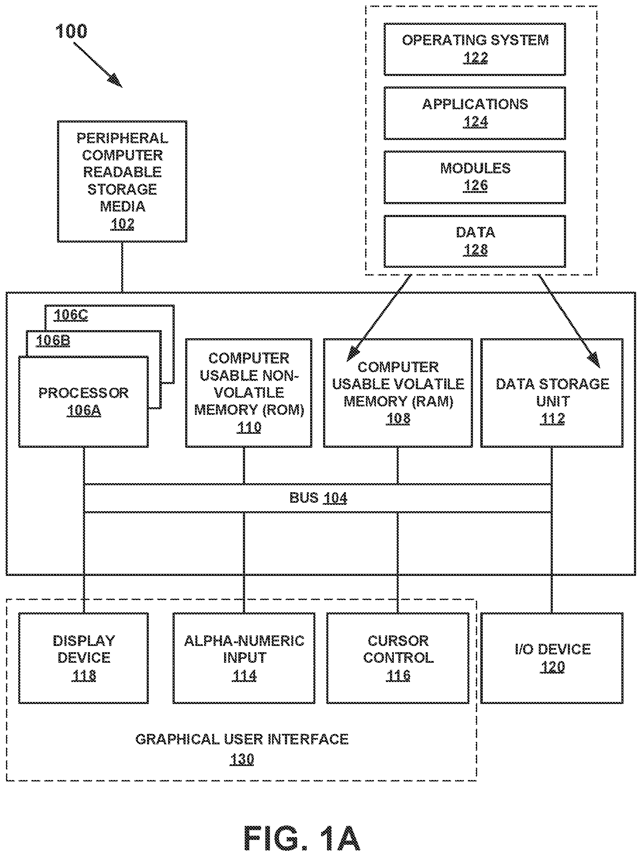

Turning now to the figures, FIG. 1A is a block diagram of an example computer system 100 upon which embodiments of the present invention can be implemented. FIG. 1A illustrates one example of a type of computer system 100 (e.g., a computer system) that can be used in accordance with or to implement various embodiments which are discussed herein.

It is appreciated that computer system 100 of FIG. 1A is only an example and that embodiments as described herein can operate on or within a number of different computer systems including, but not limited to, general purpose networked computer systems, embedded computer systems, mobile electronic devices, smart phones, server devices, client devices, various intermediate devices/nodes, standalone computer systems, media centers, handheld computer systems, multi-media devices, and the like. In some embodiments, computer system 100 of FIG. 1A is well adapted to having peripheral tangible computer-readable storage media 102 such as, for example, an electronic flash memory data storage device, a floppy disc, a compact disc, digital versatile disc, other disc based storage, universal serial bus "thumb" drive, removable memory card, and the like coupled thereto. The tangible computer-readable storage media is non-transitory in nature.

Computer system 100 of FIG. 1A includes an address/data bus 104 for communicating information, and a processor 106A coupled with bus 104 for processing information and instructions. As depicted in FIG. 1A, computer system 100 is also well suited to a multi-processor environment in which a plurality of processors 106A, 106B, and 106C are present. Conversely, computer system 100 is also well suited to having a single processor such as, for example, processor 106A. Processors 106A, 106B, and 106C may be any of various types of microprocessors. Computer system 100 also includes data storage features such as a computer usable volatile memory 108, e.g., random access memory (RAM), coupled with bus 104 for storing information and instructions for processors 106A, 106B, and 106C. Computer system 100 also includes computer usable non-volatile memory 110, e.g., read only memory (ROM), coupled with bus 104 for storing static information and instructions for processors 106A, 106B, and 106C. Also present in computer system 100 is a data storage unit 112 (e.g., a magnetic or optical disc and disc drive) coupled with bus 104 for storing information and instructions. Computer system 100 also includes an alphanumeric input device 114 including alphanumeric and function keys coupled with bus 104 for communicating information and command selections to processor 106A or processors 106A, 106B, and 106C. Computer system 100 also includes a cursor control device 116 coupled with bus 104 for communicating user input information and command selections to processor 106A or processors 106A, 106B, and 106C. In one embodiment, computer system 100 also includes a display device 118 coupled with bus 104 for displaying information.

Referring still to FIG. 1A, display device 118 of FIG. 1A may be a liquid crystal device (LCD), light emitting diode display (LED) device, cathode ray tube (CRT), plasma display device, a touch screen device, or other display device suitable for creating graphic images and alphanumeric characters recognizable to a user. Cursor control device 116 allows the computer user to dynamically signal the movement of a visible symbol (cursor) on a display screen of display device 118 and indicate user selections of selectable items displayed on display device 118. Many implementations of cursor control device 116 are known in the art including a trackball, mouse, touch pad, touch screen, joystick or special keys on alphanumeric input device 114 capable of signaling movement of a given direction or manner of displacement. Alternatively, it will be appreciated that a cursor can be directed and/or activated via input from alphanumeric input device 114 using special keys and key sequence commands. Computer system 100 is also well suited to having a cursor directed by other means such as, for example, voice commands. In various embodiments, alphanumeric input device 114, cursor control device 116, and display device 118, or any combination thereof (e.g., user interface selection devices), may collectively operate to provide a graphical user interface (GUI) 130 under the direction of a processor (e.g., processor 106A or processors 106A, 106B, and 106C). GUI 130 allows user to interact with computer system 100 through graphical representations presented on display device 118 by interacting with alphanumeric input device 114 and/or cursor control device 116.

Computer system 100 also includes an I/O device 120 for coupling computer system 100 with external entities. For example, in one embodiment, I/O device 120 is a modem for enabling wired or wireless communications between computer system 100 and an external network such as, but not limited to, the Internet. In one embodiment, I/O device 120 includes a transmitter. Computer system 100 may communicate with a network by transmitting data via I/O device 120.

Referring still to FIG. 1A, various other components are depicted for computer system 100. Specifically, when present, an operating system 122, applications 124, modules 126, and data 128 are shown as typically residing in one or some combination of computer usable volatile memory 108 (e.g., RAM), computer usable non-volatile memory 110 (e.g., ROM), and data storage unit 112. In some embodiments, all or portions of various embodiments described herein are stored, for example, as an application 124 and/or module 126 in memory locations within computer usable volatile memory 108, computer-readable storage media within data storage unit 112, peripheral computer-readable storage media 102, and/or other tangible computer-readable storage media.

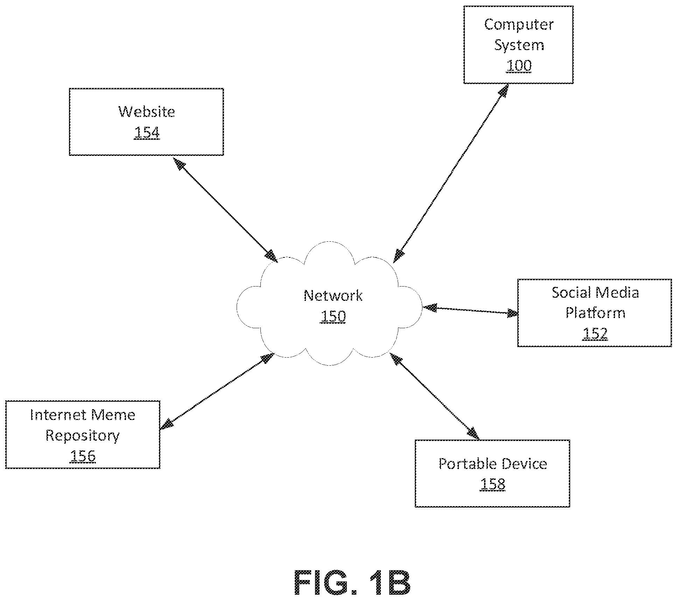

FIG. 1B illustrates an example communication network 150 upon which embodiments described herein may be implemented. FIG. 1B illustrates computer system 100, social media platform 152, website 154, and Internet meme repository 156, all of which are communicatively coupled via network 150. It should be appreciated that social media platform 152, website 154, and Internet meme repository 156, may be maintained and served by an instance of a computer system 100 or another computer system.

In one embodiment, social media platform 152, website 154, and Internet meme repository 156 are monitored by computer system 100. Computer system 100 monitors social media platform 152, website 154, and Internet meme repository 156, for digital visual content including a visual moment and a caption, using the methods described in more detail below to identify and track Internet memes. The visual moment can be any type of file that can be rendered on an electronic device (e.g., an image file or a video file). It should be appreciated that any type of media file format can be used in accordance with the described embodiments, including but not limited to Graphics Interchange Format (GIF), WebM, WebP, MPEG-4 (MP4), Animated Portable Network Graphics (APNG), Motion JPEG, Flash video (FLV), Windows Media video, M4V, etc.

Additionally, the computer system 100, the social media platform 152, website 154, or Internet meme repository 156 may host a market for Internet memes as discussed in more detail below.

Also illustrated in FIG. 1B is a portable computing device 158, which may for example be a smartphone, tablet, laptop etc. and is used by a user to access the social media platform 152, website 154, Internet meme repository 156 or computer system 100 via the network 150, or to communicate with other users on similar portable devices 158. The portable device 158 in one example has the same or similar architecture, components and capabilities as the computer system 100 discussed above with reference to FIG. 1B. The portable device 158 may include a number of applications 124 for accessing the other computing devices in FIG. 1B, including a web browser, a messaging app for communicating with other users, a social media app for accessing the social media platform 152, an app for buying and selling meme assets a meme economy as discussed in more detail below, and so forth. These functions may be provided in separate applications or embodied in one application, and a particular function may be performed locally by an application 124, or remotely on one or more of the remote devices such as social media platform 152, website 154, Internet meme repository 156 or computer system 100.

### Example System for Identification and Tracking of Internet Memes

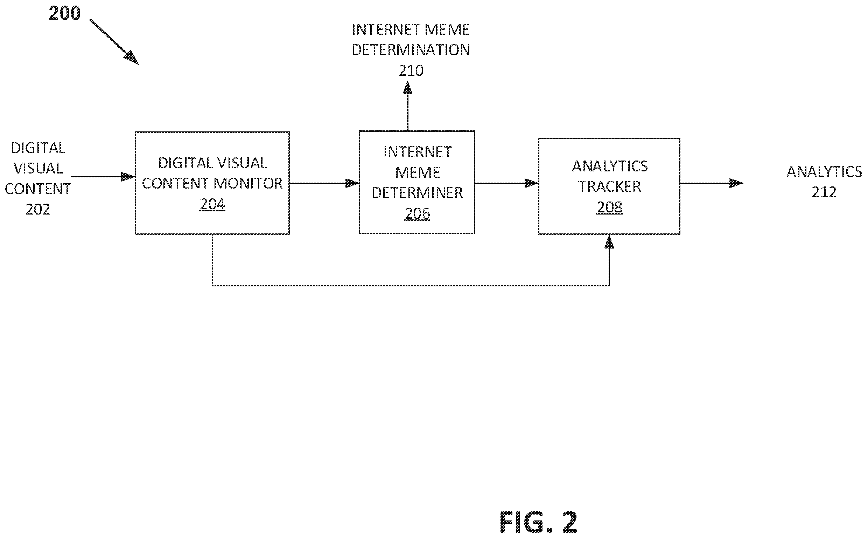

FIG. 2 is a block diagram illustrating a system 200 for identifying and tracking Internet memes, in accordance with embodiments. System 200 is configured to perform a novel process of identifying altered and tracking Internet memes which is necessarily rooted in computer technology to overcome a problem specifically arising in the realm of the analysis of digital video content items. In one embodiment, system 200 provides an Internet meme determination 210 for digital visual content 202. System 200 includes digital visual content monitor 204, Internet meme determiner 206, and analytics tracker 208. System 200 can be implemented by a computer system, e.g., computer system 100, to access digital visual content from known sources over the Internet, to identify and track Internet memes. Although shown as separate components in FIG. 2, digital video content item digital visual content monitor 204, Internet meme determiner 206, and analytics tracker 208, can be implemented as a single component or as any other combination of components for performing the described functionality.

In the example shown in FIG. 2, digital visual content 202 is accessed at digital visual content monitor 204. In one embodiment, digital visual content 202 is provided by a user via a client computer system. In other embodiments, digital visual content 202 is received in response to digital visual content monitor accessing known sources, such as websites, social media networks, Internet meme repositories, or other sources of digital visual content. It should be appreciated that digital visual content 202 can be accessed or received using different methods and responsive to different conditions.

In some embodiments, digital visual content 202 is an image file. In some embodiments, digital visual content 202 is a video file, such as a GIF file. While embodiments described herein pertain to GIF files, it should be appreciated that other types of prerecorded media files, such as other types of video files, can be used herein. Moreover, it should be appreciated that any type of media file format can be used in accordance with the described embodiments, including but not limited to GIF, WebM, WebP, MPEG-4 (MP4), APNG, Motion JPEG, Flash video (FLV), Windows Media video, M4V, etc. It should be appreciated that digital visual content 202 can be looped (e.g., via a HTML 5 video element or Flash video element) to automatically repeat. In some embodiments, the digital visual content 202 is a short form looping video file (e.g., less than 60 seconds).

With reference to FIG. 2, Internet meme determiner 206 handles identifying whether digital visual content 202 is an Internet meme. In some embodiments, Internet meme determiner 206 determines whether digital visual content 202 includes a same visual moment as other instances of digital visual content. Provided the instances of digital visual content include the same visual moment, it is determined that digital visual content 202 is identified as similar digital visual content to the corresponding digital visual content.

Internet meme determiner 206 is also configured to track each instance of similar digital visual content. This tracking enables the determination as to whether a new instance of digital visual content (or an instance of digital visual content not previously identified as an Internet meme) is an Internet meme. Provided a total number of instances of the similar digital visual content exceeds an Internet meme threshold (e.g., 10 instances), the similar digital visual content is identified as an Internet meme, wherein the same visual moment is a root visual moment and each caption corresponds to a different iteration of the Internet meme. Internet meme determiner 206 is configured to generate Internet meme determination 210 indicating whether digital visual content 202 is an Internet meme.

In accordance with some embodiment, Internet meme determiner 206 is configured to identify new Internet memes as they are created, in real time. An Internet meme for this purpose is an image or video (a visual moment or visual aspect) that becomes a template for Internet users to re-iterate with different captions. A root visual moment (e.g., an image or a video) is identified, where the identification is based on visual similarity. In some embodiments, a machine learning engine is used that generates a visual tensor. Every tensor has a distance metric, such that between any two images a distance can be calculated. The visual tensor has the following properties:
- Identical binary files will have identical tensors;
- Tensors for visually identical content that is saved in different formats will have identical or near identical tensors; and
- Minor visual alterations, such as changing resolution, changing colors, or altering parts of the content, will result in tensors that have a very low distance score between one another, and can confidently be called the same.

A determination whether the same root visual moment is re-iterated with a variation is then made. In one embodiment, this determination detects whether the visual content is the same but text is different. In another embodiment, this determination detects whether the visual content is close to the same but measurably different. Mathematically, this means clusters of tensors that have distance measure less than X but greater than Y, where X and Y are chosen such that new variations are likely to be greater than X, but unrelated content is likely to be greater than Y.

In other embodiments, Internet meme determiner 206 is configured to determine whether digital visual content 202 is an instance of a previously identified Internet meme by comparing digital visual content 202 to identify Internet memes.

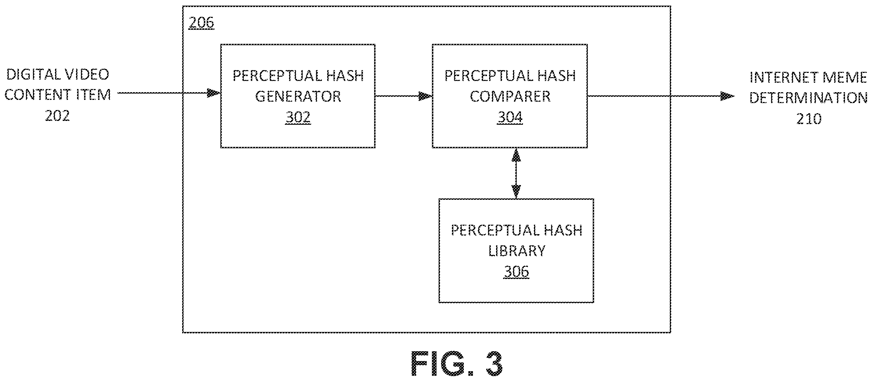

FIG. 3 is a block diagram illustrating Internet meme determiner 206 of a system 200 for identifying an Internet meme, in accordance with embodiments In one embodiment, Internet meme determiner 206 receives digital visual content 202. Perceptual hash generator 302 generates a perceptual hash for digital visual content 202. Perceptual hash generator 302 is configured to generate perceptual hashes for digital visual content 202. In some embodiments, where digital visual content 202 is a video file, multiple perceptual hashes corresponding to frames of the video file may be generated. Perceptual hashing, as utilized herein, refers to an algorithm or function that is applied to a media file for generating a fingerprint or signature for the media file where the greater the similarity between two media files, the greater the similarity between the perceptual hashes for the two media files. In some embodiments, the output of a perceptual hashing function is a string or sequence, referred to herein as a perceptual hash. For example, two images that are visually similar to a person will have perceptual hashes that are similar, while two images that are visually much different to a person will have perceptual hashes that are less similar. Perceptual hashing can be contrasted with cryptographic hashing where slight variances in the input drastically change the output. Perceptual hashing is useful in determining whether two images are similar. Example perceptual hash functions include phash and dhash, but other types of perceptual hash functions exist and may be utilized herein, in accordance with the described embodiments. In various embodiments, perceptual hashing is utilized in the context of video files by generating perceptual hashes for frames of the video files.

In accordance with various embodiments described herein, similarity between media files, e.g., images or frames of videos, is determined by comparing perceptual hashes for the media files. Perceptual hash comparer 304 is configured to compare the perceptual hash of digital visual content 202 to previously generated perceptual hashes corresponding to other digital visual content (some of which may be identified as Internet nienies) stored in a perceptual hash library 306. An edit distance, also referred to herein as a "distance," between the perceptual hashes is determined As utilized herein, an edit distance refers to a measure of difference between two sequences or strings. For example, edit distance is a measurement of how dissimilar two strings or sequences are to one another by counting the minimum number of operations required to transform one string into the other. Various types distance determinations may be utilized in accordance with the described embodiments, including and without limitation, the Levenshtein distance, the Hamming distance, the Damerau-Levenshtein distance, and the longest common sequence (LCS).

The edit distance between the perceptual hash for digital visual content 202 and perceptual hashes of perceptual hash library 306 is determined. Provided the edit distance between two perceptual hashes satisfies a similarity threshold, it is determined that the instances of digital visual content corresponding to the perceptual hashes include the same visual moment. It should be appreciated that the similarity threshold allows for minor differences in the digital visual content, and can be tuned according to various confidence levels. For instance, if the two perceptual hashes are identical, it is determined that the instances of digital visual content are identical, and refer to the same image. If the two perceptual hashes are not identical, but satisfy the similarity threshold, the instances of digital visual content may include the same underlying visual moment, but include a different caption, and are determined to be different instances of the same digital visual content.

As described above, if it is determined that the number of different instances of the same digital visual content exceeds an Internet meme threshold (e.g., 10 instances), the similar digital visual content is identified as an Internet meme, wherein the same visual moment is a root visual moment and each caption corresponds to a different iteration of the Internet meme.

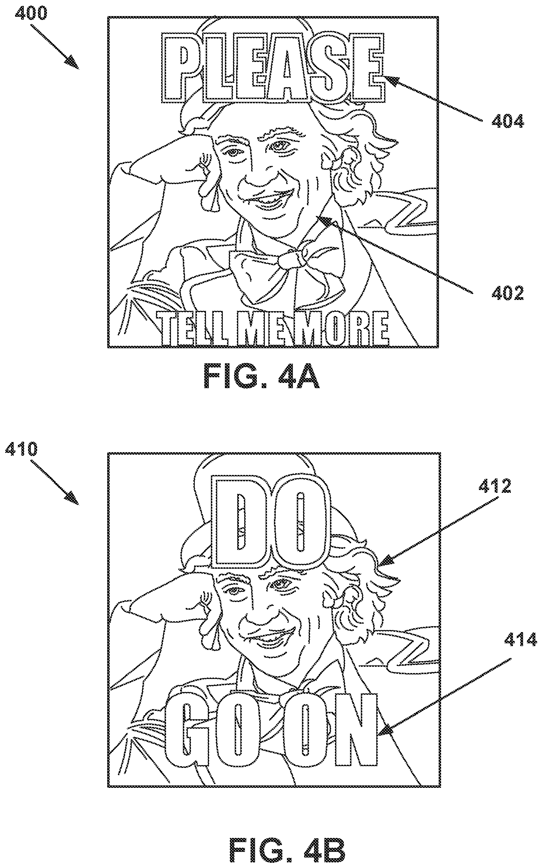

With reference to FIG. 4A and FIG. 4B, examples of different iterations of the same Internet meme are illustrated, according to some embodiments. As illustrated in FIG. 4A, a digital image 400 is illustrated, where the underlying moment 402 of digital image 400 includes an actor portraying a character, and a caption 404 reciting the phrase "please tell me more." As illustrated in FIG. 4B, a digital image 410 is illustrated, where the underlying moment 412 of digital image 410 includes the actor portraying the character, and a caption 414 reciting the phrase "do go on." Underlying moments 402 and 412, as illustrated, are identical and are the same underlying moment, while captions 404 and 414 are different. As such, in accordance with the described embodiments, digital images 400 and 410 are difference instances of the same Internet meme.

With reference again to FIG. 2, analytics tracker 208 is configured to track each instance of each Internet meme at the known sources, including the tracking of each iteration of each Internet meme. Analytics 212 are generated by analytics tracker 208, where analytics 212 includes objective data quantifying the reach and virality of each Internet meme (and each iteration of each Internet meme).

In some embodiments, having identified Internet memes, each individual Internet meme is then tracked and recorded over time. These measures include the total number of iterations of the Internet meme, the reach of each iteration of the Internet meme, and a total score for each Internet meme based on the number of iterations and the reach of the Internet meme.

Total number of iterations of the Internet meme: Recording when each iteration of an Internet meme occurs. In some embodiments, an iteration is only counted if it is generated by a different social media account than previous iterations. Iterations of the Internet meme can include Internet memes that are a literal derivative of an image or video. For example, when someone has used an Internet meme template with an image or video to alter it and make a derivative. An example would be an image of the President and Speaker of the House at the State of the Union Address - one image (roughly) is used and people alter it with different text captions or effects. Iterations of the Internet meme can also include related Internet memes that are copied in style but not from the exact same source image or video of the original meme. An example of this would be a politician's exaggerated hand movements while giving a speech taken from different videos taken at different times, or different screenshots (e.g. face on, profile view etc.) of the same extended scream scene in a miniseries.

The reach of each iteration: in some embodiments, the reach is calculated using: 1) engagement measures from each social media platform, e.g., likes on Facebook, Twitter and Instagram, upvotes on Reddit, number of comment replies on 4chan, 2) the total number of actual views on an Internet meme repository, e.g., Gfycat/Memento or otherwise, when that data is available; and 3) each measure is normalized using weighted rankings. For example, for a set of existing Gfycat posts on twitter, the number of Retweets and Likes is read and correlated to the average retweet per view and average like per view.

A total score is calculated combining iterations and reach. The intent of the score is to objectively measure cultural impact, so that it is very unlikely for a high impact meme to have a low score, and very unlikely for a low impact meme to high score. The formula can be stated in the most generic way as satisfying these conditions:
- For one *iteration:* social_score = *f*(Likes, Shares,Views) where *f* is some strictly increasing monotonic function.
- For the *collection* of *all iterations of one meme:* total_score = *f*({a,b,c,...}) where {a,b,c,...} is the *N* sized collection of social_score values for each iteration of the meme and *f* is some monotonic function that is (a) strictly increasing according to the inputs (Likes, Shares, Views) of each social_score and (b) strictly increasing according to *N*, the size of the collection, which by definition is the total number of iterations of the meme.
- An example formula satisfying these conditions is the simple sum of scores of each iteration, with each score the simple sum of social engagement numbers.

As presented above, identification and tracking of Internet memes is important for determining the reach and effectiveness of Internet memes. Providing objective measurements on the virality of a meme is important for facilitating the creation and promotion of Internet memes. In particular, providing measurable data on the volume and exposure of Internet memes improves the accuracy of the performance of an Internet meme, providing insight to Internet meme creators and promotors that was not previously available. Hence, the embodiments of the present invention greatly extend beyond conventional methods of identification and tracking of Internet memes. Moreover, embodiments of the present invention amount to significantly more than merely using a computer to perform identification and tracking of Internet memes. Instead, embodiments of the present invention specifically recite a novel process, rooted in computer technology, utilizing objective identification and tracking of Internet memes across multiple websites and social media platforms to determine an objective determination of virality of Internet memes.

### Example Internet Meme Economy

As described above, embodiments of the present invention provide systems and methods for objectively evaluating a cultural impact of an Internet meme. For example, a viral score can be calculated based on objective measurements of the number of iterations of an Internet meme and a reach of each iteration of the Internet meme. Using these objective measurements, a "meme economy" can be established for providing a trading platform allowing users to invest in Internet memes and to speculate on their viral impact (e.g., viral score) with the objective of "buying" Internet memes as they ascend in viral impact.

Embodiments described herein provide a meme economy that enable users to use digital currency to invest in Internet memes. Users identify content they believe may become viral, purchase an asset related to the relevant Internet memes using a form of currency (e.g., "memecoins"), enabling the value of the asset to increase as the reach of that meme expands.

The described meme economy provides a tradable asset assigned to each Internet meme (for example, a unique cryptocoin referred to as a memecoin), whose value is known to be tied to the viral score calculated by Internet meme analytics as described above. The relation between asset future value and viral score occurs in this way:
- When a new Internet meme is identified, the asset is created and offered for sale on the market at a low price, as "shares" of that Internet meme.
- The number of assets distributed for one Internet meme is limited to a fixed amount, calculated based on the size of the economy. Users can then trade on the open market based on the value they believe the Internet meme will eventually reach.
- When the viral score (as calculated above) crosses specific thresholds, the trading platform automatically places buy offers at a higher price than the original base price. This means that any user holding shares in a particular Internet meme will have a guaranteed profit opportunity. The user can then choose to sell to realize that profit, or retain their investment if they believe the meme will continue to rise.

The described meme economy also utilizes base virtual currency that is circulated to facilitate trading. Overall, the meme economy enables users to use digital currency to invest in Internet memes. Users identify content they believe may become viral, put memecoins behind it, and reap rewards as the reach of that meme expands.

The host of the Internet meme economy platform firstly creates a new currency for use in the meme economy. The Internet meme economy platform may for example be hosted on the computer system 100, the social media platform 152, website 154, or Internet meme repository 156. In one example, the cryptocurrency is based on a fork of tokens, known as lumens, issued by the Stellar Development Foundation. Stellar lumens is an existing open source cryptocurrency, and a fork of the currency is created by opening an issuing account and with the new currency identified by a combination of an asset code and an issuer name. Each token so identified is offered by, and redeemable with, one specific issuer. In the example described herein, the base currency is a fork of Stellar lumens called memecoin.

Memecoins can be traded using Stellar distribution accounts. Before an account can hold an asset issued by an issuing account, a verification known as a trustline is required. A trustline is an explicit opt-in to hold a particular token, so it specifies both asset code and issuer.

To create new memecoins, the issuing account makes a payment to a (verified) distribution account using the newly named asset, and tokens exist where before there were none. As long as the issuing account remains unlocked, it can continue to create new tokens by making payments to a distribution account, or to any other account with the requisite trustline.

In one example, memecoin distribution account access is integrated into an application 124 on the portable device 158 and the user's memecoin account is associated with a messaging application or social media account user name or profile, so that a user does not require a separate distribution account to participate in the meme economy. Initially, memecoins may be created via an Initial Exchange Offering, at which memecoins are offered for sale on the public market.

Memecoins may also be offered for purchase directly by users (using real or other digital currency) via a website or in-app purchases. Memecoins may be established by the host of the meme economy distributing memecoins from the issuing account as promotional items or to reward members of an existing social media or messaging platform. Memecoins may also be provided to reward users for actions that they take on the messaging or social networking platform. For example, meme creators may be given memecoins when they create new memes, users may be given memecoins for playing games on the platform, curating or rating new or existing memes, sharing the application 124 with other users by providing a download code, recruiting new members, marking images to train new meme classifiers, and so forth. Additional memecoins can be created without limit by the issuing account issuing memecoins to a standalone or application-integrated distribution account.

A meme for inclusion in the meme economy platform can be specifically identified, for example by a user or meme creator uploading a candidate meme themselves or by identifying an individual post on another user's account. An externally imported or referenced meme provides a link out directly from the application 124 to the original post, crediting that Internet creator and allowing users of the meme economy platform or application to explore the meme ecosystem in which the meme is located, wherever that meme originates,

The original meme creator can claim credit on the meme economy platform by messaging authentication codes, using the social media account they own, to an automated authenticator on the meme economy platform, which will verify the identity and location of the meme that is being claimed. In one example, OAuth may be used to authenticate the meme creator. OAuth is an open standard for access delegation, commonly used as a way for Internet users to grant websites or applications access to their information on other websites but without giving them the passwords. Claiming of a meme by an original owner will result in the original owner being credited with a certain number of shares in that meme or in the award of a certain number of memecoins.

Until the original content creator claims the post, the first person to import it and invest in the meme will be provided with a smaller incentive on the meme economy platform, for example full or fractional shares in the meme, memecoins or fractions thereof, or activity credit that will count towards an award of one or more memecoins.

A meme asset can also be identified as part of a root meme that has been identified by the system (e.g. "Distracted Boyfriend.") Also, the meme may be identified by the meme economy platform performing meme identification and tracking methods, for example as described herein.

Once a meme has been identified, the meme economy platform offers shares for purchase in the identified meme, at a set offering price, for example one memecoin per share. A transaction cost (for example a fraction of a memecoin) may be deducted on purchase or sale of any shares in a meme. The purchased shares in any meme can then be openly traded by users in a share market hosted by the meme economy platform, which is analogous to other asset trading platforms in which shares can be bought and sold between willing participants. Ownership of meme shares is maintained and transactions are executed on a distributed ledger scheme such as blockchain which is publicly verifiable and accessible. Access to the distributed ledger scheme is also preferably integrated into the application 124, to provide a seamless user experience.

To stimulate increasing value with increasing popularity, once a meme reaches certain popularity or viral score thresholds, automated buy contracts are triggered at a progressively higher values for progressively higher popularity or viral score.

For example, suppose that a user purchases one share of a post or meme for a cost of one memecoin, when the post is at 97 views, shares, likes, or other impressions. If and when the post or meme crosses 100,000 views shares, likes or other impressions, an automatic offer to buy all shares for 100 memecoins per share will be triggered by the meme economy platform. In response, the user can choose to sell for a hundred times more memecoin than their initial purchase, or they can hold on to their shares in hopes they increase further in value. Because of this known predictive value, the shares in the meme or post will increase in value progressively as the number of views or shares or other impressions increases and the likelihood of the threshold being met becomes more likely, with the value of the share likely being worth somewhere near 100 memecoins on the open market even while the view counter is less than 100,000 views, and well before the buyback is triggered. Users can thus trade shares in a meme based on their predicted future popularity.

Actual thresholds and buyback values will vary as the meme economy evolves, likely creating an inflation rate that can be accounted for by the meme economy platform. For example, if the value of initial shares increases rapidly after the initial one memecoin per share offering, future offerings can be priced at a higher per share value. At intervals, the number of memecoins users earn for activities, new meme creation, or meme identification is increased accordingly.

Memes are identified and grouped using automated visual perception hashes as described above, in one example, which automated identification and grouping may be combined or refined with human (user) curation. When an image goes on to become a "template" meme (repurposed for multiple diverse expressions by different users), the system will automatically categorize the lineage of the relationship with parent, child, and sibling memes. Investors in the parent meme receive split shares as the lineage expands, potentially exponentially increasing their memecoin earnings. For each "payout" event (awarding further shares as a meme grows into child memes or triggering buyouts as a meme crosses virality thresholds), there may be a multiplier factor.

Memes started on a messaging or social media platform associated with the inerne economy platform, or uploaded as original content through the application 124 by the original creator of the meme, will receive full payout for child or sibling memes, e.g., the original creator of the meme will receive a corresponding share in a child or sibling meme for each share owned in a parent meme. Similarly, when popularity thresholds are reached, the original creator of the meme will receive a buyback offer at a premium, for example 50%, over the regular buyback offer (e.g. 15o memecoins in the 100 memecoin buyback offer example desribed above).

Memes brought into the platform by the first user who is not the creator are on a second tier and receive 1/2 payout for child or sibling memes, e.g. the first user will receive a corresponding half share in a child or sibling meme for each share owned in a parent meme. Similarly, when popularity thresholds are reached, the first user will receive a buyback offer at a premium, for example 25%, over the regular buyback offer (e.g. 125 memecoins in the 100 memecoin buyback offer example described above).

Memes merely purchased on the open market are third tier and receive 1/4 payout for child or sibling memes, e.g., a mere meme owner will receive a corresponding quarter share in a child or sibling meme for each share owned in a parent meme. No premium is provided on the buyback offer made to mere owners of shares.

Additional lineage will be paid out based on the ownership of the child or sibling meme, which then becomes a new parent. In the mere meme owner example above, identification of a child of a child of a meme will result in a mere owner of the ultimate parent (now the grandparent) receiving a quarter of a quarter of the shares owned in the ultimate parent.

The meme economy platform may display, for example via a meme economy application 124 on a display device of the portable device 158, a user interface for interacting with the meme economy. The user interface may provide different interaction options to a user of the portable device 158, including presenting user-selectable options for researching available memes for purchase, a trading interface for obtaining current prices for shares in a particular meme and placing purchase or sell orders, a portfolio interface showing currently held meme shares and their market values, and so forth.

Additionally, a default meme economy "feed" screen may be displayed to the user when a meme economy application 124 is opened or when a meme economy menu option is selected in a messaging or social media application 124. The default screen may provide content discovery feeds in particular. For example a main feed with the immediate, most popular or trending memes, user posts including such memes, or any posts from users, memes, or meme categories to which a user of the portable device 158 may have subscribed or "followed."

A Search button with associated text entry field may return a list of memes or posts having such memes, or a best-match post or meme, or a display of memes or posts in a tile arrangement, or may provide relevant categories for browsing. A "Hot and Fresh" button or other user interface may result in the display of new memes that might present investment opportunities that are currently cheap but believed to be on the rise. A "post" is typically a post on a social networking or other platform that includes a relevant meme (to show context or type of usage of the meme) but may also be a post on the meme economy platform discussing a particular meme.

A number of possible user interactions may be provided by the application 124 when a particular meme is displayed. For example, in response to receiving a user swipe up/down on the user interface, the application 124 may provide the next meme in a new-memes feed. The direction of a swipe by a user may indicate a vote or judgement on the meme to the meme economy platform, for example receipt of a swipe up is an upvote or thumbs up while receipt of a swipe down is a downvote or thumbs down. Receipt of a swipe right (when an indicator, e.g. a right arrow, displayed by the application 124 shows availability) on a meme, may permit browsing of today's posts sharing or using that same meme. Receipt of a swipe left by the user may cause the application 124 to display live comments and discussion for that meme on the display of the portable device 158. Receipt by the application 124 of a tap on a meme may transition the display in the user interface to a trading screen or popup window to bring up Buy/Sell options and analytics showing the stock chart for the particular meme. Tapping on a meme to bring up a trading interface may apply throughout the user interface, regardless of where the user may have navigated, including on the main feed with trending memes, search results, and any other discovery, curation or research user interface areas.

Human curation, rewarded by the meme economy platform, may take the form of any number of operations to improve or confirm meme identification and tracking that is performed by the platform using the methods described herein. In one example, a user may have navigated to a user interface associated with rating or categorizing memes to "mine" for memecoin by performing certain activities. In response, the application 124 may display (on a display device of the portable device 158), a meme that has been identified by the meme economy platform and ask a user to confirm it, for example by confirming or dismissing categorizations associated with the meme, by rating the meme, or by verifying whether or not the user has come across the meme and how often and when (e.g. a lot, some, a little, none and recently, not in a while, a long time ago, never).

The platform may also display a new likely meme that has been identified by the meme economy platform and ask a user to name it, provide categorizations associated with the meme, a rating, and so forth, coalescing around popular choices using hash tags or hyperlinked categories. Furthermore, a meme that has been identified as having a family relationship could be displayed with its parent and/or child and the user asked to confirm the lineage. User-provided categorizations and rankings may be used to refine the memes presented to other users of the meme economy platform.

The classifiers associated with a meme resulting from human curation may also be combined with classifiers generated automatically by the meme economy platform using automated image analysis and text recognition, to generate new classifiers or more advanced meme classifiers based on a concepts or combinations not previously observed or used by the system. For example, machine learning may be used to group and classify more advanced memes that are not based on simple templates (for example, the meme "Celebrity as Brand " or "Celebrity as product," which could for example be "Ben Affleck as Dunkin Donuts" or "Hayley Williams as fine wine."

The images found in such memes may for example be entirely different, but the concept might be common to the memes or the nature of the relationship (X as Y) might be a new form of categorization. An existing machine learning infrastructure that analyzes visual content and text to classify a large list of celebrities, games, and other content could adapt to complex memes by training new classifiers as the memes arise. As memes are categorized by users, the system could compare the new classifiers with existing classifiers and if the system detects a new classifier being applied consistently across different memes then the meme economy platform may trigger the machine learning scheme to attempt the creation of new classifiers or determination of an association between existing classifiers.

Third party signing keys and an API may link the application 124 to affiliate websites or platforms like "Know Your Meme," to certify the start of memes, to provide early identification of memes, or to provide related content that is accessible via the affiliate. The benefit for the affiliate would be to receive traffic from user navigation to the affiliate site from meme information displayed in the application 124, where the user can access the meme's history and origin. The benefit for the host of the meme economy platform is a richer experience for users and trusted, authenticated meme curation.

In another example, the application 124 may provide in-application tokens or "in-game" currency that is not linked to a cryptocurrency. Users can use the in-application tokens to buy and sell meme shares as a game or simulation. This in-game currency would be a game asset and is not a cryptocurrency and there would be no ability to earn cryptocurrency or actual money, but otherwise the user experience provided is similar to memecoin ownership of meme shares, in that in-game currency can be carried by completing tasks, and holders of in-game currency can trade "in game" meme shares with other holders of in-game currency. The number of in-game trades may be limited. The "in game" currency may be used to can gain access to other "in game" features, make other "in game" purchases or improve user account power levels as they grow their "in game" meme share portfolio. By providing a simulated or in-application meme share trading experience, user engagement may be increased and users may also be motivated to graduate to meme share trading using memecoins.

### Example Operations of Identifying and Tracking Internet Memes

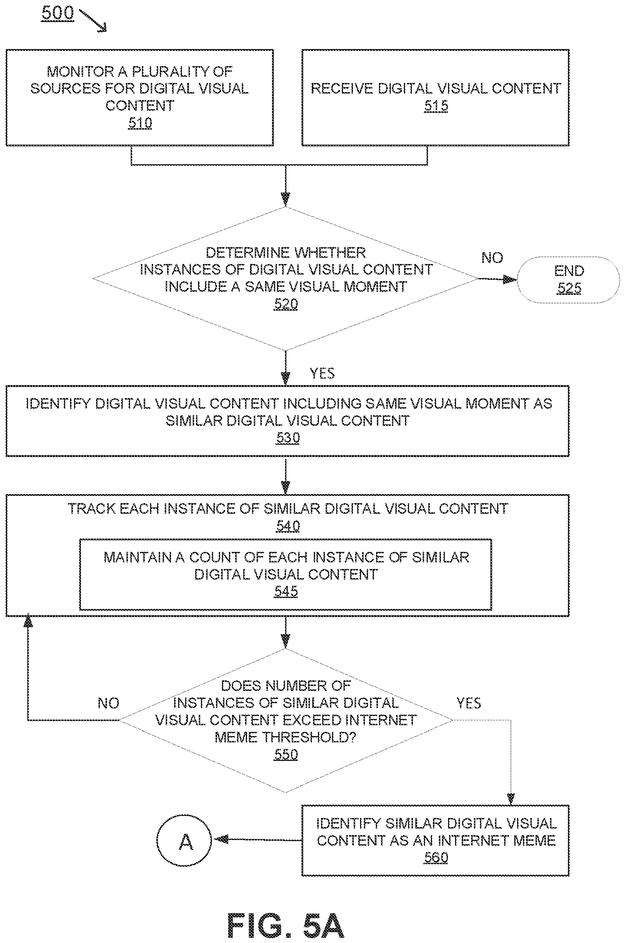

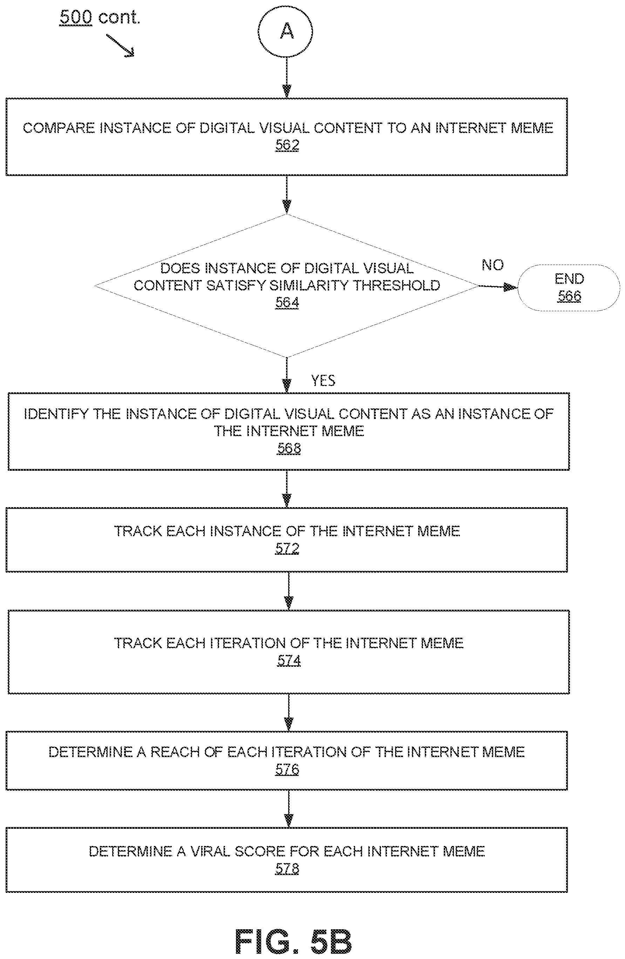

The following discussion sets forth in detail the operation of some example methods of operation of embodiments. With reference to FIGS. 5 to 9, flow diagrams 500, 600, 700, 800 and 900 illustrates example operations used by various embodiments. The flow diagrams includes some operations that, in various embodiments, are carried out by a processor under the control of computer-readable and computer-executable instructions. In this fashion, operations described herein and in conjunction with the flow diagrams are, or may be, implemented using a computer, in various embodiments. The computer-readable and computer-executable instructions can reside in any tangible computer readable storage media. Some non-limiting examples of tangible computer readable storage media include random access memory, read only memory, magnetic disks, solid state drives/"disks," and optical disks, any or all of which may be employed with computer environments (e.g., computer system 100). The computer-readable and computer-executable instructions, which reside on tangible computer readable storage media, are used to control or operate in conjunction with, for example, one or some combination of processors of the computer environments and/or virtualized environment. It is appreciated that the processor(s) may be physical or virtual or some combination (it should also be appreciated that a virtual processor is implemented on physical hardware). Although specific operations are disclosed in the flow diagram, such operations are examples. That is, embodiments are well suited to performing various other operations or variations of the operations recited in the flow diagram. Likewise, in some embodiments, the operations in flow diagrams may be performed in an order different than presented and/or not all of the operations described in flow diagrams may be performed. It is further appreciated that operations described in flow diagrams may be implemented in hardware, or a combination of hardware with firmware and/or software provided by computer system 100.

FIG. 5A and FIG. 5B illustrate a flow diagram 500 of an example method for identifying an Internet meme, according to various embodiments. At operation 510, a plurality of sources are monitored for digital visual content comprising a visual moment and a caption. In accordance with various embodiments, the plurality of sources include websites and social media sites. In one embodiment, as shown at operation 515, an instance of digital visual content is received. In one embodiment, the digital visual content includes an image. In another embodiment, the digital visual content includes a video. In one embodiment, the video is a short form looping video content item.

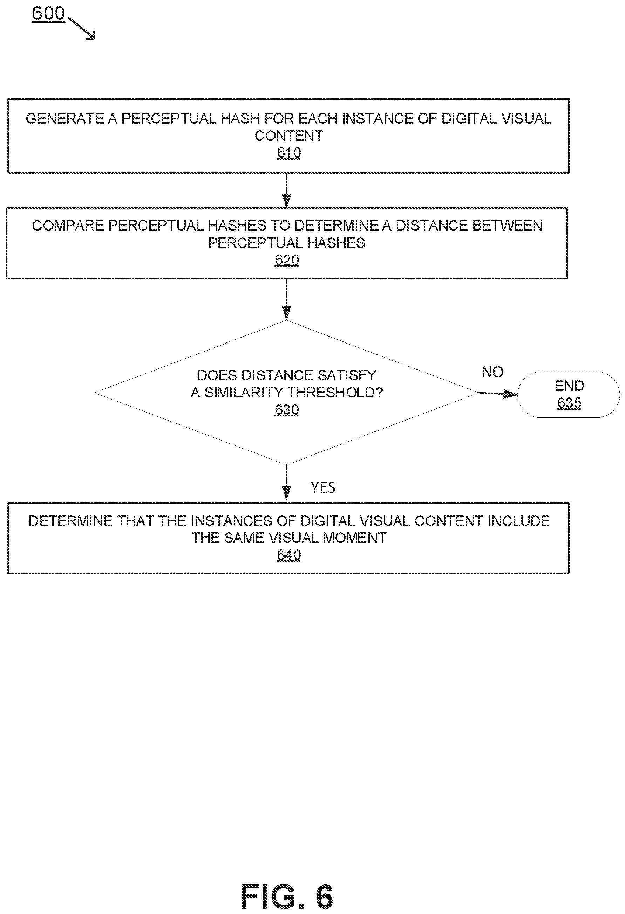

Referring initially to FIG. 5A, at operation 520, it is determined whether instances of digital visual content include a same visual moment. If it is determined that instances of digital visual content do not include a same visual moment, flow diagram 500 ends, as shown at operation 525. Alternatively, if it is determined that instances of the digital visual content do include a same visual moment, flow diagram 500 proceeds to operation 530. In one embodiment, operation 520 is performed according to flow diagram 600 of FIG. 6.

At operation 530, provided the instances of digital visual content include the same visual moment, the instances of digital visual content including the same visual moment are identified as similar digital visual content. In one embodiment, provided the distance between two perceptual hashes satisfies the similarity threshold, as shown at operation 630, the instances of digital visual content corresponding to the perceptual hashes are identified as similar digital visual content.

At operation 540, each instance of the similar digital visual content is tracked. In one embodiment, as shown at operation 545, a count of each instance of the similar digital visual content is maintained. At operation 550, it is determined whether the number of instances of the similar digital visual content exceeds an Internet meme threshold. Provided a total number of instances of the similar digital visual content does not exceed an Internet meme threshold, flow diagram 500 returns to operation 540. Provided a total number of instances of the similar digital visual content exceeds an Internet meme threshold, as shown at operation 560, the similar digital visual content is identified as an Internet meme, wherein the same visual moment is a root visual moment and each caption corresponds to a different iteration of the Internet meme.

Turning now to FIG. 5B at operation 562, an instance of digital visual content is compared to an Internet meme. At operation 564, it is determined whether or not the instance of digital visual content satisfies a similarity threshold with the Internet meme. If it is determined that the instance of digital visual content does not satisfy the similarity threshold, flow diagram 500 ends, as shown at operation 566. If it is determined that the instance of digital visual content does satisfy the similarity threshold, as shown at operation 568, the instance of digital visual content is identified as an instance of the Internet meme. In one embodiment, it is determined whether the instance of the Internet meme is identical to another instance of the Internet meme. Provided the instance of the Internet meme is not identical to another instance of the Internet meme, it is determined that the instance of the Internet meme is a new iteration of the Internet meme. Provided the instance of the Internet meme is identical to another instance of the Internet meme, it is determined that the instance of the Internet meme is another instance of an existing iteration of the Internet meme.

At operation 572, each instance of the Internet meme is tracked at the plurality of sources. At operation 574, each iteration of the Internet meme is tracked. At operation 576, a reach of each iteration of the Internet meme is determined, wherein the reach of each iteration of the Internet meme corresponds to engagement with each iteration of the Internet meme. In one embodiment, as shown at operation 578, a viral score for each Internet meme is calculate, the viral score including a first component associated with the reach of each iteration of the Internet meme and a second component associated with a number of iterations of each Internet meme.

FIG. 6 illustrates a flow diagram 600 of an example method for determining whether instances of digital visual content includes the same visual moment, according to various embodiments. At operation 610, a perceptual hash is generated for each instance of digital visual content. At operation 620, perceptual hashes for each instance of the digital visual content are compared to determine a distance between the perceptual hashes. At operation 630, it is determined whether the distance satisfies a similarity threshold. Provided the distance between two perceptual hashes does not satisfy a similarity threshold, flow diagram 600 ends, as shown at operation 635. Provided the distance between two perceptual hashes satisfies a similarity threshold, as shown at operation 640, it is determined that the instances of digital visual content corresponding to the perceptual hashes include the same visual moment.

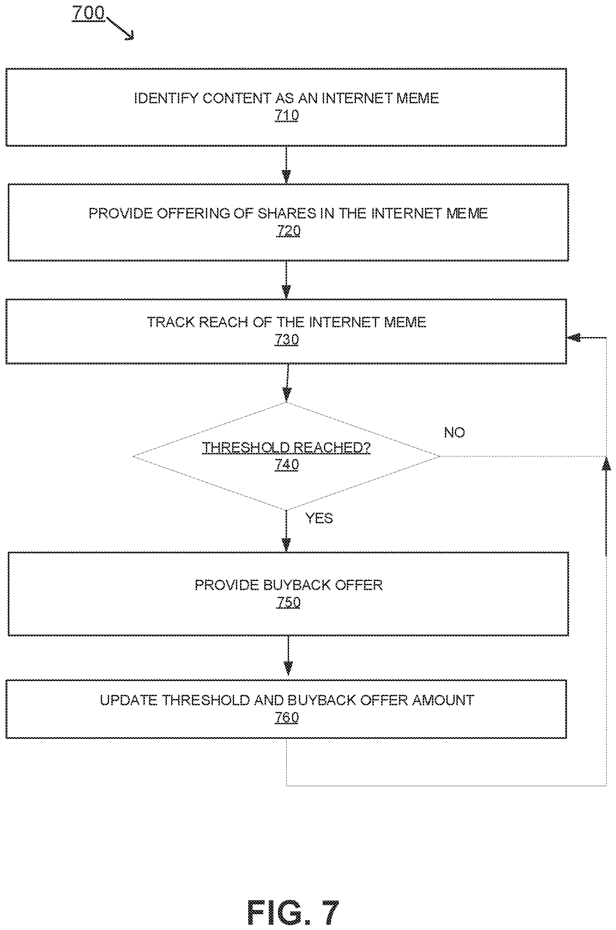

FIG. 7 illustrates a flow diagram 700 of an example method for offering shares in an Internet meme. At operation 710, content is identified by the meme economy platform as an Internet meme. In one example, this is done using the method illustrated by the steps in flow diagram 500 shown in FIG. 5A and described above.

At operation 120, the meme economy platform offers shares for purchase in the identified meme, at an initial price per share reflected as a number of cryptocurrency coins, e.g. memecoins. A transaction cost (for example a fraction of a cryptocurrency coin) may be deducted on purchase or sale of any shares in a meme. The purchased shares in any meme assets can then be openly traded by users in a share market hosted by the meme economy platform.

The popularity of the identified meme is then tracked by the meme economy platform at operation 730. In one example, this tracking is performed by analytics tracker 208 described above with reference to FIG. 2. The popularity or virality of the meme as reflected by the analytics tracker 208 is compared to a predefined threshold in operation 740. If the threshold has not been reached, the tracking of the meme continues at operation 730. If the threshold has been reached, a buyback offer is provided to owners of shares in the meme at operation 750. The buyback offer is in the form of a specific price for the shares in the Internet meme, based on the threshold level. A number of different thresholds with increasing share prices may be provided as the meme becomes more popular. If the buyback offer is accepted, the meme shares are purchased by the meme economy platform at the relevant price for the particular threshold. If the buyback offer is not accepted, the offer may expire after a certain amount of time. Additionally, as discussed above, a creator of the meme may be given a premium buyback offer over a user who first identified the meme, who may in turn be given a premium buyback offer over a user who is a mere owner or subsequent purchaser of shares in a meme.

At operation 760, the meme economy platform updates the threshold to the next popularity or virality threshold and updates the buyback offer amount. The buyback amount may not be updated immediately, but may be dynamically determined or updated again as the threshold approaches. The flow diagram then proceeds with tracking of the Internet meme at operation 730.

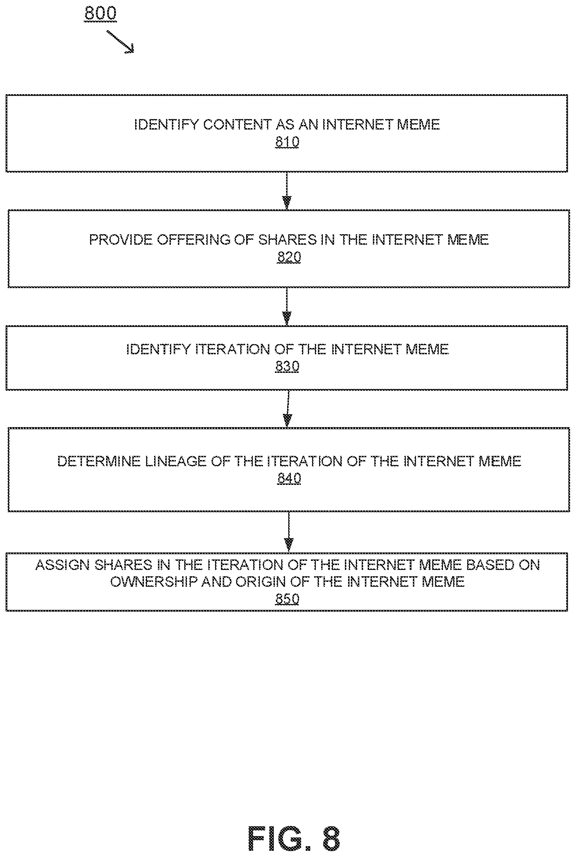

FIG. 8 illustrates a flow diagram 800 of an example method for assigning shares in an iteration of an Internet meme. At operation 810, content is identified by the meme economy platform as an Internet meme. In one example, this is done using the method illustrated by the steps in flow diagram 500 shown in FIG. 5A and described above.

At operation 820, the meme economy platform offers shares for purchase in the identified meme, at an initial price per share reflected as a number of cryptocurrency coins, e.g. memecoins. A transaction cost (for example a fraction of a cryptocurrency coin) may be deducted on purchase or sale of any shares in a meme. The purchased shares in any meme assets can then be openly traded by users in a share market hosted by the meme economy platform.

At operation 830, a new iteration of a meme is identified. In one example, this is done using the method illustrated by the steps in flow diagram 500 shown in FIG. 5B and described above. The lineage of the iteration of the meme is then determined in operation 830. The meme economy platform creates a family tree and categorizes the lineage of the relationships between parent, child, and sibling memes. Lineage may be verified by platform users in exchange for rewards as discussed above.

Investors in the parent meme receive split shares in each iteration of a meme as the lineage expands, at operation 850. For each "payout" event (awarding further shares as a meme grows into child memes or triggering buyouts as a meme crosses virality thresholds), there may be a multiplier factor.

As discussed above, memes started on a messaging or social media platform associated with the meme economy platform, or uploaded as original content through the application 124 by the original creator of the meme, may receive full payout for sibling or child memes. Memes brought into the platform by the first user who is not the creator are on a second tier may receive 1/2 payout for sibling or child memes. Memes merely purchased on the open market are third tier and may receive 1/4 payout for sibling or child memes.

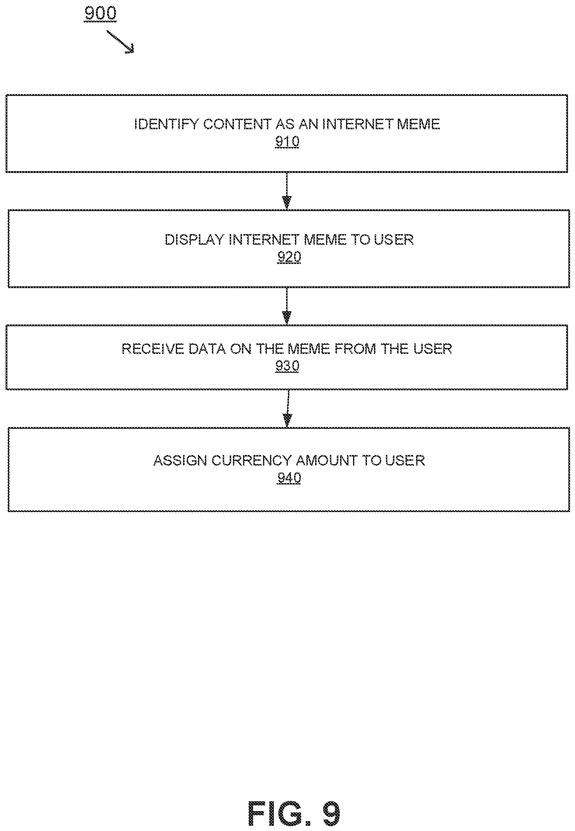

FIG. 9 illustrates a flow diagram 900 of an example method for assigning cryptocurrency to a user in exchange for receiving data on a meme. At operation 910, content is identified by the meme economy platform as an Internet meme. In one example, this is done using the method illustrated by the steps in flow diagram 500 shown in FIG. 5A and described above,

At operation 920, the application 124 displays the meme to a user of the portable device 158 on a display of the portable device 158. User data on the meme is then received by the application 124 from the user of the portable device 1 58 at operation 930. For example, received user data may confirm or dismiss categorizations associated with the meme, rate the meme, or verify whether or not the user has come across the meme, how often and when (e.g. a lot, some, a little, none and recently, not in a while, a long time ago, never).

The platform may also display a new likely meme that has been identified by the meme economy platform and ask a user to name it, provide categorizations associated with the meme, a rating, and so forth. Furthermore, a meme that has been identified as having a family relationship could be displayed with its parent and/or child and the user asked to confirm the lineage.

After receiving user data on the meme, the meme economy platform credits the user's account with an amount of cryptocurrency (e.g. memecoins) corresponding to the amount or value of data received from the user, at step 940.

The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. Many aspects of the different example embodiments that are described above can be combined into new embodiments. The description as set forth is not intended to be exhaustive or to limit the embodiments to the precise form disclosed. Rather, the specific features and acts described above are disclosed as example forms of implementing the claims.

Reference throughout this document to "one embodiment," "certain embodiments," "an embodiment," "various embodiments," "some embodiments," or similar term means that a particular feature, structure, or characteristic described in connection with the embodiment is included in at least one embodiment. Thus, the appearances of such phrases in various places throughout this specification are not necessarily all referring to the same embodiment. Furthermore, the particular features, structures, or characteristics of any embodiment may be combined in any suitable manner with one or more other features, structures, or characteristics of one or more other embodiments without departing from the scope of the appended claims.

## Claims

1. A method of determining and tracking virality of Internet memes, executed by one or more processors, the method comprising:
monitoring a plurality of online sources for digital visual content, the digital visual content comprising a visual moment and a caption;
determining whether instances of digital visual content include a same visual moment by:
generating a perceptual hash for each instance of digital visual content;
comparing perceptual hashes for each instance of the digital visual content to determine a distance between the perceptual hashes;
provided the distance between two perceptual hashes satisfies a similarity threshold, determining that the instances of digital visual content corresponding to the perceptual hashes include the same visual moment; and
provided the instances of digital visual content include the same visual moment, identifying the instances of digital visual content including the same visual moment as similar digital visual content;
tracking each instance of the similar digital visual content;
provided a total number of instances of the similar digital visual content exceeds an Internet meme threshold, identifying the similar digital visual content as an Internet meme;
providing an offering of shares in the Internet meme at a first share price;
receiving a digital currency purchase of shares in the Internet meme from a user;
tracking a reach of the Internet meme; and
based on the tracking of the Internet meme reaching a first threshold, providing a buyback offer for shares in the Internet meme at a second share price, the second share price being greater than the first share price.

2. The method of claim 1 further comprising:
based on the tracking of the Internet meme reaching a second threshold that is greater than the first threshold, providing a buyback offer for shares in the Internet meme at a third share price, the third share price being greater than the second share price.

3. The method of claim 1 wherein the digital currency comprises in-application tokens for a game application, the in-application tokens being usable to gain access to game application features or improve game application power levels.

4. The method of claim 1 further comprising:
identifying an iteration of the Internet meme; and
assigning shares in the iteration of the Internet meme to shareholders of the Internet meme.

5. The method of claim 4 wherein the assigning of the shares comprises:
determining a lineage of the Internet meme; and
assigning shares in the iteration of the Internet meme to shareholders of the Internet meme based on the lineage of the Internet meme.

6. The method of claim 4 wherein the assigning of the shares comprises:
determining a relationship of an owner of the shares in the Internet meme to the Internet meme; and
assigning shares in the iteration of the Internet meme based on the relationship of the owner of the shares in the Internet meme to the Internet meme.

7. The method of claim 6 wherein a multiplier is applied to the shares in the Internet meme to determine a number of shares in the iteration of the Internet meme that are assigned, the multiplier being greater for a creator of the Internet meme than for a mere owner of shares of the Internet meme.

8. The method of claim 1 further comprising:
displaying a further Internet meme to a user;
receiving data on the further Internet meme from the user; and
awarding cryptocurrency to the user based on the data received from the user on the further Internet meme.

9. A computing apparatus comprising:
a processor; and
a memory storing instructions that, when executed by the processor, cause the apparatus to determine and track virality of Internet memes by configuring the apparatus to:
monitor a plurality of online sources for digital visual content, the digital visual content comprising a visual moment and a caption;
determine whether instances of digital visual content include a same visual moment by:
generating a perceptual hash for each instance of digital visual content;
comparing perceptual hashes for each instance of the digital visual content to determine a distance between the perceptual hashes;
provided the distance between two perceptual hashes satisfies a similarity threshold, determining that the instances of digital visual content corresponding to the perceptual hashes include the same visual moment; and
provided the instances of digital visual content include the same visual moment, identifying the instances of digital visual content including the same visual moment as similar digital visual content;
track each instance of the similar digital visual content;
provided a total number of instances of the similar digital visual content exceeds an Internet meme threshold, identify the similar digital visual content as an Internet meme;
provide an offering of shares in the Internet meme at a first share price;
receive a cryptocurrency purchase of shares in the Internet meme from a user;
track a reach of the Internet meme; and
based on a number of tracked instances of the Internet meme reaching a first threshold, providing a buyback offer for shares in the Internet meme at a second share price, the second share price being greater than the first share price.

10. The computing apparatus of claim 9 wherein the instructions further configure the apparatus to:
based on the tracking of the meme reaching a second threshold that is greater than the first threshold, providing a buyback offer for shares in the Internet meme at a third share price, the third share price being greater than the second share price.

11. The computing apparatus of claim 9 wherein the cryptocurrency comprises in-application tokens for a game application, the in-application tokens being usable to gain access to game application features or improve game application power levels.

12. The computing apparatus of claim 9 wherein the instructions further configure the apparatus to:
identify an iteration of the Internet meme; and
assign shares in the iteration of the Internet meme to shareholders of the Internet meme.

13. The computing apparatus of claim 9 wherein the instructions further configure the apparatus to:
display a further Internet meme to a user;
receive data on the further Internet meme from the user; and
award cryptocurrency to the user based on the data received from the user on the further Internet meme.

14. The computing apparatus of claim 13 wherein the data comprises data on a lineage of the further Internet meme or data categorize the further Internet meme.

15. A non-transitory computer-readable storage medium, the computer-readable storage medium including instructions that when executed by a computer, cause the computer to determine and track virality of Internet memes by configuring the computer to:
monitor a plurality of online sources for digital visual content, the digital visual content comprising a visual moment and a caption;
determine whether instances of digital visual content include a same visual moment by:
generating a perceptual hash for each instance of digital visual content;
comparing perceptual hashes for each instance of the digital visual content to determine a distance between the perceptual hashes;
provided the distance between two perceptual hashes satisfies a similarity threshold, determining that the instances of digital visual content corresponding to the perceptual hashes include the same visual moment; and
provided the instances of digital visual content include the same visual moment, identifying the instances of digital visual content including the same visual moment as similar digital visual content;
track each instance of the similar digital visual content;
provided a total number of instances of the similar digital visual content exceeds an Internet meme threshold, identify the similar digital visual content as an Internet meme;
provide an offering of shares in the Internet meme at a first share price;
receive a cryptocurrency purchase of shares in the Internet meme from a user;
track a reach of the Internet meme; and
based on the tracking of the Internet meme reaching a first threshold, providing a buyback offer for shares in the Internet meme at a second share price, the second share price being greater than the first share price.

## Patentansprüche

1. Verfahren zum Bestimmen und Verfolgen der Viralität von Internet-Memes, das von einem oder mehreren Prozessoren ausgeführt wird, wobei das Verfahren Folgendes umfasst:
Überwachen einer Vielzahl von Online-Quellen auf digitale visuelle Inhalte, wobei die digitalen visuellen Inhalte einen visuellen Moment und eine Bildunterschrift umfassen;
Bestimmen, ob Fälle von digitalen visuellen Inhalten den gleichen visuellen Moment enthalten, durch:
Generieren eines Wahrnehmungs-Hashes (Perceptual Hash) für jeden Fall von digitalen visuellen Inhalten;
Vergleichen von Wahrnehmungs-Hashes für jeden Fall von digitalen visuellen Inhalten, um einen Abstand zwischen den Wahrnehmungs-Hashes zu bestimmen;
vorausgesetzt, dass der Abstand zwischen zwei Wahrnehmungs-Hashes einen Ähnlichkeitsschwellenwert erfüllt, Feststellen, dass die Fälle von digitalen visuellen Inhalten, die den Wahrnehmungs-Hashes entsprechen, den gleichen visuellen Moment enthalten; und
vorausgesetzt, dass die Fälle von digitalen visuellen Inhalten den gleichen visuellen Moment enthalten, Identifizieren der Fälle von digitalen visuellen Inhalten, die den gleichen visuellen Moment enthalten, als ähnliche digitale visuelle Inhalte;
Verfolgen jedes Falles von ähnlichem digitalem visuellem Inhalt;
vorausgesetzt, dass die Gesamtzahl der Fälle von ähnlichem digitalem visuellem Inhalt einen Schwellenwert für Internet-Memes überschreitet, Identifizieren des ähnlichen digitalen visuellen Inhalts als Internet-Meme;
Bereitstellen eines Angebots von Anteilen am Internet-Meme zu einem ersten Anteilspreis;
Erhalten eines Kaufs von Anteilen am Internet-Meme in digitaler Währung von einem Benutzer;
Verfolgen einer Reichweite des Internet-Memes; und
basierend auf der Verfolgung des Internet-Memes, das einen ersten Schwellenwert erreicht, Unterbreiten eines Rückkaufangebots für Anteile am Internet-Meme zu einem zweiten Anteilspreis, wobei der zweite Anteilspreis höher ist als der erste Anteilspreis.

2. Verfahren nach Anspruch 1, das ferner umfasst:
basierend auf der Verfolgung des Internet-Memes, das einen zweiten Schwellenwert erreicht, der größer ist als der erste Schwellenwert, Unterbreiten eines Rückkaufangebots für Anteile am Internet-Meme zu einem dritten Anteilspreis, wobei der dritte Anteilspreis höher ist als der zweite Anteilspreis.

3. Verfahren nach Anspruch 1, wobei die digitale Währung anwendungsinterne Token für eine Spieleanwendung umfasst, wobei die anwendungsinternen Token verwendet werden können, um Zugriff auf Funktionen der Spieleanwendung zu erhalten oder die Leistungsstufen der Spieleanwendung zu verbessern.

4. Verfahren nach Anspruch 1, das ferner umfasst:
Identifizieren einer Iteration des Internet-Memes; und
Zuweisen von Anteilen an der Iteration des Internet-Memes an Anteilseigentümer des Internet-Memes.

5. Verfahren nach Anspruch 4, wobei das Zuweisen der Anteile umfasst:
Bestimmen einer Abstammung des Internet-Memes; und
Zuweisen von Anteilen an der Iteration des Internet-Memes an Anteilseigentümer des Internet-Memes auf Basis der Abstammung des Internet-Memes.

6. Verfahren nach Anspruch 4, wobei das Zuweisen der Anteile umfasst:
Bestimmen einer Beziehung eines Eigentümers der Anteile an dem Internet-Meme zu dem Internet-Meme; und
Zuweisen von Anteilen an der Iteration des Internet-Memes an Anteilseigentümer des Internet-Memes auf Basis der Abstammung des Internet-Memes.

7. Verfahren nach Anspruch 6, wobei ein Multiplikator auf die Anteile an dem Internet-Meme angewendet wird, um eine Anzahl von Anteilen an der Iteration des Internet-Memes zu bestimmen, die zugewiesen werden, wobei der Multiplikator für einen Ersteller des Internet-Memes größer ist als für einen bloßen Eigentümer von Anteilen an dem Internet-Meme.

8. Verfahren nach Anspruch 1, das ferner umfasst:
Anzeigen eines weiteren Internet-Memes einem Benutzer;
Empfangen von Daten über das weitere Internet-Meme von dem Benutzer; und
Gewähren von Kryptowährung dem Benutzer auf Basis der vom Benutzer über das weitere Internet-Meme empfangenen Daten.

9. Rechnervorrichtung, umfassend:
einen Prozessor; und
einen Speicher, der Anweisungen speichert, die, wenn sie vom Prozessor ausgeführt werden, die Vorrichtung veranlassen, die Viralität von Internet-Memes zu bestimmen und zu verfolgen, indem die Vorrichtung konfiguriert wird zum:
Überwachen einer Vielzahl von Online-Quellen auf digitale visuelle Inhalte, wobei die digitalen visuellen Inhalte einen visuellen Moment und eine Bildunterschrift umfassen;
Bestimmen, ob Fälle von digitalen visuellen Inhalten den gleichen visuellen Moment enthalten, durch:
Generieren eines Wahrnehmungs-Hashes (Perceptual Hash) für jeden Fall von digitalen visuellen Inhalten;
Vergleichen von Wahrnehmungs-Hashes für jeden Fall von digitalen visuellen Inhalten, um einen Abstand zwischen den Wahrnehmungs-Hashes zu bestimmen;
vorausgesetzt, dass der Abstand zwischen zwei Wahrnehmungs-Hashes einen Ähnlichkeitsschwellenwert erfüllt, Feststellen, dass die Fälle von digitalen visuellen Inhalten, die den Wahrnehmungs-Hashes entsprechen, den gleichen visuellen Moment enthalten; und
vorausgesetzt, dass die Fälle von digitalen visuellen Inhalten den gleichen visuellen Moment enthalten, Identifizieren der Fälle von digitalen visuellen Inhalten, die den gleichen visuellen Moment enthalten, als ähnliche digitale visuelle Inhalte;
Verfolgen jedes Falles von ähnlichem digitalem visuellem Inhalt;
vorausgesetzt, dass die Gesamtzahl der Fälle von ähnlichem digitalem visuellem Inhalt einen Schwellenwert für Internet-Memes überschreitet, Identifizieren des ähnlichen digitalen visuellen Inhalts als Internet-Meme;
Bereitstellen eines Angebots von Anteilen am Internet-Meme zu einem ersten Anteilspreis;
Erhalten eines Kaufs von Anteilen am Internet-Meme in Kryptowährung von einem Benutzer;
Verfolgen einer Reichweite des Internet-Memes; und
basierend auf einer Anzahl von verfolgten Fällen des Internet-Memes, die einen ersten Schwellenwert erreicht, Unterbreiten eines Rückkaufangebots für Anteile am Internet-Meme zu einem zweiten Anteilspreis, wobei der zweite Anteilspreis höher ist als der erste Anteilspreis.

10. Rechnervorrichtung nach Anspruch 9, wobei die Anweisungen die Vorrichtung ferner konfigurieren zum:
basierend auf der Verfolgung des Internet-Memes, das einen zweiten Schwellenwert erreicht, der größer ist als der erste Schwellenwert, Unterbreiten eines Rückkaufangebots für Anteile am Internet-Meme zu einem dritten Anteilspreis, wobei der dritte Anteilspreis höher ist als der zweite Anteilspreis.

11. Verfahren nach Anspruch 9, wobei die digitale Währung anwendungsinterne Token für eine Spieleanwendung umfasst, wobei die anwendungsinternen Token verwendet werden können, um Zugriff auf Funktionen der Spieleanwendung zu erhalten oder die Leistungsstufen der Spieleanwendung zu verbessern.

12. Rechnervorrichtung nach Anspruch 9, wobei die Anweisungen die Vorrichtung ferner konfigurieren zum:
Identifizieren einer Iteration des Internet-Memes; und
Zuweisen von Anteilen an der Iteration des Internet-Memes an Anteilseigentümer des Internet-Memes.

13. Rechnervorrichtung nach Anspruch 9, wobei die Anweisungen die Vorrichtung ferner konfigurieren zum:
Anzeigen eines weiteren Internet-Memes einem Benutzer;
Empfangen von Daten über das weitere Internet-Meme von dem Benutzer; und
Gewähren von Kryptowährung dem Benutzer auf Basis der vom Benutzer über das weitere Internet-Meme empfangenen Daten.

14. Rechnervorrichtung nach Anspruch 13, wobei die Daten Daten über eine Abstammung des weiteren Internet-Memes umfassen oder Daten das weitere Internet-Meme kategorisieren.

15. Nichtflüchtiges computerlesbares Medium, wobei das computerlesbare Speichermedium Anweisungen umfasst, die, wenn sie von einem Rechner ausgeführt werden, den Rechner veranlassen, die Viralität von Internet-Memes zu bestimmen und zu verfolgen, indem sie den Rechner konfigurieren zum:
Überwachen einer Vielzahl von Online-Quellen auf digitale visuelle Inhalte, wobei die digitalen visuellen Inhalte einen visuellen Moment und eine Bildunterschrift umfassen;
Bestimmen, ob Fälle von digitalen visuellen Inhalten den gleichen visuellen Moment enthalten, durch:
Generieren eines Wahrnehmungs-Hashes (Perceptual Hash) für jeden Fall von digitalen visuellen Inhalten;
Vergleichen von Wahrnehmungs-Hashes für jeden Fall von digitalen visuellen Inhalten, um einen Abstand zwischen den Wahrnehmungs-Hashes zu bestimmen;
vorausgesetzt, dass der Abstand zwischen zwei Wahrnehmungs-Hashes einen Ähnlichkeitsschwellenwert erfüllt, Feststellen, dass die Fälle von digitalen visuellen Inhalten, die den Wahrnehmungs-Hashes entsprechen, den gleichen visuellen Moment enthalten; und
vorausgesetzt, dass die Fälle von digitalen visuellen Inhalten den gleichen visuellen Moment enthalten, Identifizieren der Fälle von digitalen visuellen Inhalten, die den gleichen visuellen Moment enthalten, als ähnliche digitale visuelle Inhalte;
Verfolgen jedes Falles von ähnlichem digitalem visuellem Inhalt;
vorausgesetzt, dass die Gesamtzahl der Fälle von ähnlichem digitalem visuellem Inhalt einen Schwellenwert für Internet-Memes überschreitet, Identifizieren des ähnlichen digitalen visuellen Inhalts als Internet-Meme;
Bereitstellen eines Angebots von Anteilen am Internet-Meme zu einem ersten Anteilspreis;
Erhalten eines Kaufs von Anteilen am Internet-Meme in Kryptowährung von einem Benutzer;
Verfolgen einer Reichweite des Internet-Memes; und
basierend auf der Verfolgung des Internet-Memes, das einen ersten Schwellenwert erreicht, Unterbreiten eines Rückkaufangebots für Anteile am Internet-Meme zu einem zweiten Anteilspreis, wobei der zweite Anteilspreis höher ist als der erste Anteilspreis.

## Revendications

1. Procédé de détermination et de suivi de la viralité de mêmes Internet, exécuté par un ou plusieurs processeurs, le procédé comprenant :
la surveillance d'une pluralité de sources en ligne pour un contenu visuel numérique, le contenu visuel numérique comprenant un moment visuel et une légende ;
la détermination du fait de savoir si des instances de contenu visuel numérique comportent un même moment visuel par :
la génération d'un hachage perceptuel pour chaque instance de contenu visuel numérique ;
la comparaison de hachages perceptuels pour chaque instance du contenu visuel numérique pour déterminer une distance entre les hachages perceptuels ;
à condition que la distance entre deux hachages perceptuels satisfasse un seuil de similarité, la détermination que les instances de contenu visuel numérique correspondant aux hachages perceptuels comportent le même moment visuel ; et
à condition que les instances de contenu visuel numérique comportent le même moment visuel, l'identification des instances de contenu visuel numérique comportant le même moment visuel en tant que contenu visuel numérique similaire ;
le suivi de chaque instance du contenu visuel numérique similaire ;
à condition qu'un nombre total d'instances du contenu visuel numérique similaire dépasse un seuil de même Internet, l'identification du contenu visuel numérique similaire en tant que même Internet ;
la fourniture d'une offre d'actions pour le même Internet à un premier cours de l'action ;
la réception d'un achat d'actions en cryptomonnaie pour le même Internet à partir d'un utilisateur ;
le suivi d'une évolution du même Internet ; et
sur la base du suivi du même Internet atteignant un premier seuil, la fourniture d'une offre de rachat d'actions pour le même Internet à un deuxième cours de l'action, le deuxième cours de l'action étant supérieur au premier cours de l'action.

2. Procédé selon la revendication 1, comprenant en outre :
sur la base du suivi du même Internet atteignant un deuxième seuil supérieur au premier seuil, la fourniture d'une offre de rachat d'actions pour le même Internet à un troisième cours de l'action, le troisième cours de l'action étant supérieur au deuxième cours de l'action.

3. Procédé selon la revendication 1, dans lequel la cryptomonnaie comprend des jetons intégrés à l'application pour une application de jeu, les jetons intégrés à l'application pouvant être utilisés pour accéder à des fonctionnalités d'une application de jeu ou améliorer des niveaux de puissance d'une application de jeu.

4. Procédé selon la revendication 1, comprenant en outre :
l'identification d'une itération du même Internet ; et
la cession d'actions dans l'itération du même Internet à des actionnaires du même Internet.

5. Procédé selon la revendication 4, dans lequel la cession des actions comprend :
la détermination d'une lignée du même Internet ; et
la cession d'actions dans l'itération du même Internet à des actionnaires du même Internet sur la base de la lignée du même Internet.

6. Procédé selon la revendication 4, dans lequel la cession des actions comprend :
la détermination d'une relation entre un propriétaire des actions du même Internet et le même Internet ; et
la cession d'actions dans l'itération du même Internet sur la base de la relation entre le propriétaire des actions du même Internet et le même Internet.

7. Procédé selon la revendication 6, dans lequel un multiplicateur est appliqué aux actions pour le même Internet pour déterminer un nombre d'actions dans l'itération du même Internet qui sont cédées, le multiplicateur étant plus grand pour un créateur du même Internet que pour un simple propriétaire d'actions du même Internet.

8. Procédé selon la revendication 1, comprenant en outre :
la présentation d'un autre même Internet à un utilisateur ;
la réception de données sur l'autre même Internet à partir de l'utilisateur ; et
l'attribution d'une cryptomonnaie à l'utilisateur sur la base des données reçues à partir de l'utilisateur sur l'autre même Internet.

9. Appareil informatique comprenant :
un processeur ; et
une mémoire stockant des instructions qui, lorsqu'elles sont exécutées par le processeur, amènent l'appareil à déterminer et à suivre la viralité de mêmes Internet en configurant l'appareil pour :
surveiller une pluralité de sources en ligne pour un contenu visuel numérique, le contenu visuel numérique comprenant un moment visuel et une légende ;
déterminer si des instances de contenu visuel numérique comportent un même moment visuel par :
la génération d'un hachage perceptuel pour chaque instance de contenu visuel numérique ;
la comparaison de hachages perceptuels pour chaque instance du contenu visuel numérique pour déterminer une distance entre les hachages perceptuels ;
à condition que la distance entre deux hachages perceptuels satisfasse un seuil de similarité, la détermination que les instances de contenu visuel numérique correspondant aux hachages perceptuels comportent le même moment visuel ; et
à condition que les instances de contenu visuel numérique comportent le même moment visuel, l'identification des instances de contenu visuel numérique comportant le même moment visuel en tant que contenu visuel numérique similaire ;
suivre chaque instance du contenu visuel numérique similaire ;
à condition qu'un nombre total d'instances du contenu visuel numérique similaire dépasse un seuil de même Internet, identifier le contenu visuel numérique similaire en tant que même Internet ;
fournir une offre d'actions pour le même Internet à un premier cours de l'action ;
recevoir un achat d'actions en cryptomonnaie pour le même Internet à partir d'un utilisateur ;
suivre une évolution du même Internet ; et
sur la base d'un certain nombre d'instances suivies du même Internet atteignant un premier seuil, la fourniture d'une offre de rachat d'actions pour le même Internet à un deuxième cours de l'action, le deuxième cours de l'action étant supérieur au premier cours de l'action.

10. Appareil informatique selon la revendication 9, dans lequel les instructions configurent en outre l'appareil pour :
sur la base du suivi du même atteignant un deuxième seuil supérieur au premier seuil, fournir une offre de rachat d'actions pour le même Internet à un troisième cours de l'action, le troisième cours de l'action étant supérieur au deuxième cours de l'action.

11. Appareil informatique selon la revendication 9, dans lequel la cryptomonnaie comprend des jetons intégrés à l'application pour une application de jeu, les jetons intégrés à l'application pouvant être utilisés pour accéder à des fonctionnalités d'une application de jeu ou améliorer des niveaux de puissance d'une application de jeu.

12. Appareil informatique selon la revendication 9, dans lequel les instructions configurent en outre l'appareil pour :
identifier une itération du même Internet ; et
céder des actions dans l'itération du même Internet à des actionnaires du même Internet.

13. Appareil informatique selon la revendication 9, dans lequel les instructions configurent en outre l'appareil pour :
présenter un autre même Internet à un utilisateur ;
recevoir des données sur l'autre même Internet à partir de l'utilisateur ; et
attribuer une cryptomonnaie à l'utilisateur sur la base des données reçues à partir de l'utilisateur sur l'autre même Internet.

14. Appareil informatique selon la revendication 13, dans lequel les données comprennent des données sur une lignée de l'autre même Internet ou des données catégorisant l'autre même Internet.

15. Support de stockage non transitoire lisible par ordinateur, le support de stockage lisible par ordinateur comprenant des instructions qui, lorsqu'elles sont exécutées par un ordinateur, amènent l'ordinateur à déterminer et à suivre la viralité de mêmes Internet en configurant l'ordinateur pour :
surveiller une pluralité de sources en ligne pour un contenu visuel numérique, le contenu visuel numérique comprenant un moment visuel et une légende ;
déterminer si des instances de contenu visuel numérique comportent un même moment visuel par :
la génération d'un hachage perceptuel pour chaque instance de contenu visuel numérique ;
la comparaison de hachages perceptuels pour chaque instance du contenu visuel numérique pour déterminer une distance entre les hachages perceptuels ;
à condition que la distance entre deux hachages perceptuels satisfasse un seuil de similarité, la détermination que les instances de contenu visuel numérique correspondant aux hachages perceptuels comportent le même moment visuel ; et
à condition que les instances de contenu visuel numérique comportent le même moment visuel, l'identification des instances de contenu visuel numérique comportant le même moment visuel en tant que contenu visuel numérique similaire ;
suivre chaque instance du contenu visuel numérique similaire ;
à condition qu'un nombre total d'instances du contenu visuel numérique similaire dépasse un seuil de même Internet, identifier le contenu visuel numérique similaire en tant que même Internet ;
fournir une offre d'actions pour le même Internet à un premier cours de l'action ;
recevoir un achat d'actions en cryptomonnaie pour le même Internet à partir d'un utilisateur ;
suivre une évolution du même Internet ; et
sur la base du suivi du même Internet atteignant un premier seuil, la fourniture d'une offre de rachat d'actions pour le même Internet à un deuxième cours de l'action, le deuxième cours de l'action étant supérieur au premier cours de l'action.
